(19) Europäisches Patentamt
European Patent Office
Office européen des brevets

(11) **EP 3 883 178 A1**

(12) **EUROPEAN PATENT APPLICATION**
published in accordance with Art. 153(4) EPC

(43) Date of publication:
**22.09.2021 Bulletin 2021/38**

(21) Application number: **19884666.9**

(22) Date of filing: **12.11.2019**

(51) Int Cl.:
**H04L 9/30** (2006.01)     **H04L 9/08** (2006.01)
**H04L 9/06** (2006.01)     **H04L 9/00** (2006.01)

(86) International application number:
**PCT/KR2019/015346**

(87) International publication number:
**WO 2020/101325 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2018 KR 20180138716**

(71) Applicant: **Bluepopcon Inc.**
**Gangseo-gu**
**Seoul 07803 (KR)**

(72) Inventor: **AHN, Se Whan**
**Seoul 08010 (KR)**

(74) Representative: **Gulde & Partner**
**Patent- und Rechtsanwaltskanzlei mbB**
**Wallstraße 58/59**
**10179 Berlin (DE)**

(54) **ENCRYPTION SYSTEM AND METHOD EMPLOYING PERMUTATION GROUP-BASED ENCRYPTION TECHNOLOGY**

(57) Disclosed is an encryption system using permutation group-cryptographic technology, the encryption system including a transmitting terminal for encrypting and transmitting a message, and a receiving terminal for decrypting the encrypted message, wherein the transmitting and receiving terminals simultaneously compose a symmetric key and an asymmetric key in the form of permutation based on a permutation group, encrypts a message, and then transmits and receives the encrypted message.

MAGIC CRYPTO SYSTEM(ENC/DEC)

Fig. 5

**Description**

CROSS-REFERENCE TO RELATED APPLICATION

This application claims priority to and the benefit of Korean Patent Application No. 2018-0138716, filed on November 13, 2018, and No. 2019-0144235 filed on November 12, 2019. the disclosure of which is incorporated herein by reference in its entirety.

BACKGROUND

**1. Field of the Invention**

The present disclosure relates to an encryption system and method using permutation group-based cryptographic technology, and more particularly to a method for safely generating/transmitting/restoring a ciphertext through connected spaces by differently generating a unique secret permutation each time to connect/map different spaces to be used by a cipher generating object (hereinafter referred to as "sender") and a cipher releasing object (hereinafter referred to as "receiver") after the sender and the receiver generate a secret permutation group for changing a message to a new space different from a message space configured with an original message via movement or expansion, so as to be valid for a predetermined time, the secret permutation group being generated differently each time, being generated a predetermined number of times or at a predetermined time, which is dynamically determined in advance or as necessary or is arbitrarily determined, or being generated at every specific communication time, and a system using the same. Accordingly, a security problem in terms of exposure of secret information as conventional cryptographic technology uses the same message space and the same specific value each time may be overcome.

**2. Description of the Related Art**

In 1994, when Peter Shor, an applied mathematician at MIT, proved that the time taken for factorization of prime factors can be dramatically reduced using an encryption algorithm with quantum computing (hereinafter referred to as a quantum-based algorithm), security experts around the world were shocked. This is because it is possible to currently decrypt an encrypted public key, based on factorization of prime factors for performing an exponential operation and a discrete log problem, in a short time using the Shor algorithm.
The quantum-based algorithm includes the aforementioned Shor algorithm and a Grover algorithm. According to the Grover algorithm, which affects symmetric key encryption, most symmetric key encryption methods can achieve the same level of security as before by doubling an encryption key, but when a quantum computer implementing the Shor algorithm is developed, the current public key encryption is no longer available.
Until now, most secrets have been protected in the form of asymmetric encryption. This is the case after Whitfield Diffie, Mark Hellman, and Ralph Merkle published the concept in a seminar paper called "New Directions in Cryptography" in 1976. Consider RSA, SSL, TLS, and HTTPS. This concept is applied to most websites, electronic signature downloads, online financial transactions, VPNs, smart cards, and most wireless networks. Modern secure communications are based on the fact that traditional digital computers cannot easily handle multifactor expressions including large primes. However, with the introduction of quantum computing, all secrets encrypted with this protection device are invalidated. In reality, there are claims that major countries throughout the world are recording and storing a significant amount of encrypted network traffic for decryption later and are waiting for that day to come.
Table 1 below summarizes impact on currently widely used encryption techniques.

[Table 1]

| Cryptographic algorithm | Form | Purpose | Impact of quantum computer |
|---|---|---|---|
| AES-256 | Symmetric key | Encryption | Secure |
| SHA-256, SHA-3 | - | Hash functions | Secure |
| RSA | Public key | Electronic signature, key establishment | No longer secure |
| ECDSA, ECDH (Elliptic cryptography) | Public key | Electronic signature, key | No longer secure |
| | | exchange | |

(continued)

| Cryptographic algorithm | Form | Purpose | Impact of quantum computer |
|---|---|---|---|
| DSA (finite field Cryptography) | Public key | Electronic signature, key exchange | No longer secure |

Table 2 below shows a security level comparison between the currently used cryptography and a quantum computing environment.

[Table 2]

| Cryptography | Size of key | Effective key strength/security level (bits) | |
|---|---|---|---|
| | | Conventional computing | Quantum computing |
| RSA-1024 | 1024 | 80 | 0 |
| RSA-2048 | 2048 | 112 | 0 |
| ECC-256 | 256 | 128 | 0 |
| ECC-384 | 384 | 256 | 0 |
| AES-128 | 128 | 128 | 64 |
| AES-256 | 256 | 256 | 128 |

In order to prepare for confusion caused by a public key encryption scheme, which is not secure any longer, in the upcoming quantum computing era, there is a need for a post-quantum encryption scheme that a quantum computer cannot solve.

Therefore, in order to address this issue, the present disclosure proposes a post-quantum encryption scheme and system that is effectively operated even in the current computing environment and safely protects data even in the quantum computing environment.

[Cited Reference]

[Patent Document]

    (Patent Document 1) U.S. Patent No. US 6,212,279
    (Patent Document 2) U.S. Patent No. US 6,243,467
    (Patent Document 3) U.S. Patent No. US 6,782,100

SUMMARY OF THE INVENTION

A proposed post-quantum encryption scheme needs to be improved compared with a conventional public key method in terms of performance, security, and usage because a public key encryption scheme that is not safe any longer due to a quantum computing environment needs to be replaced and needs to be appropriate for the currently used computing environment as well as a quantum computer.

Accordingly, according to the present disclosure, first, it may be possible to rapidly process encryption through an operation such as substitution and conversion of the same value as a value used in a processing method in a substitution-permutation-network (SPN) of a symmetric key encryption scheme instead of a complicated mathematical operation via multidimensional enlargement using a key-arrangement conversion method and a complicated mathematical operation with increased complexity via enlargement of a key space by performing an operation of simultaneously composing a symmetric key and an asymmetric key in the form of permutation based on a permutation group without use of a conventional complicated mathematical operation for decryption based on a quantum algorithm.

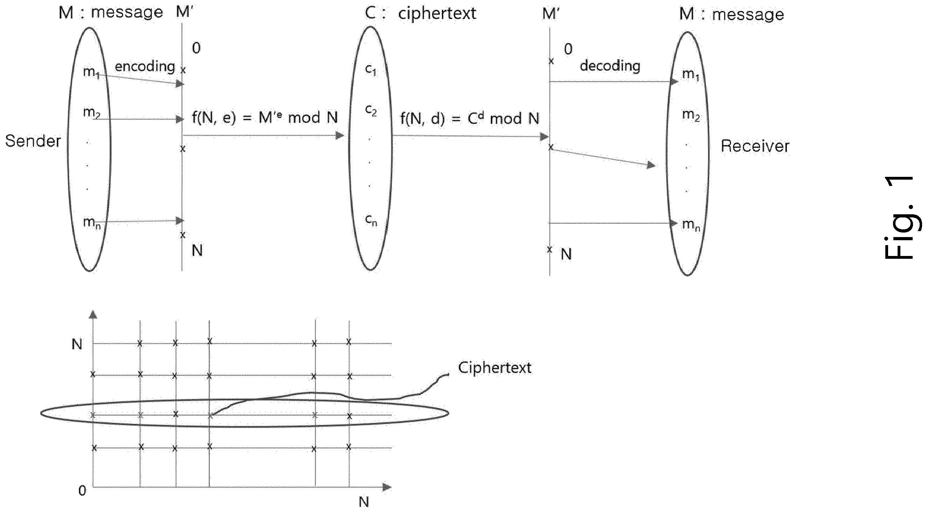

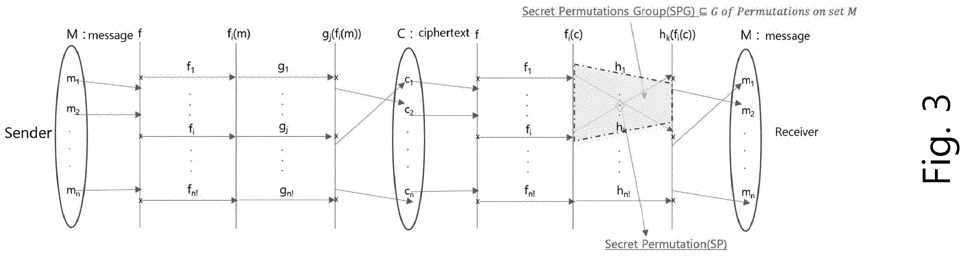

Second, conventionally, a mathematical operation of a fixed key function is performed using a key value generated once as shown in FIG. 1, and on the other hand, according to the present disclosure, whenever the sender transmits a message, key functions of a multidimensional space selected by the receiver are used to generate different key values through key functions of difference spaces each time, as shown in FIG. 3, and accordingly, even if computation performance such as improvement in computing power of a quantum computer is improved, safety and security may be provided.

Third, Table 3 below shows high security using a small key size compared with a conventional public key such as RSA. Accordingly, it may be possible to replace a public key used in a conventional computer without difficulty.

[Table 3]

| Size of key (bits) | Effective key strength/security level(bits) | |
|---|---|---|
| | Conventional computing | Quantum computing |
| 256($|M|$=32) | 128(AES) | 64 |
| 512($|M|$=64) | 256(AES) | 128 |
| 1024($|M|$=128) | 768(AES) | 384 |
| 2048($|M|$=256) | 1536(AES) | 768 |

In accordance with the present disclosure, the above and other objects can be accomplished by the provision of an encryption system using a permutation group-cryptographic technology, including an encryption execution object configured to encrypt a message, and a decryption execution object configured to decrypt the encrypted message, wherein the encryption execution object and the decryption execution object may encrypt and decrypt the message by simultaneously composing a symmetric key and an asymmetric key in the form of permutation based on a permutation group and may then decrypt an original message using the symmetric key and a private key of the asymmetric key in the form of permutation based on a permutation group when the message is decrypted again.

According to an embodiment of the present disclosure, the encryption execution object and the decryption execution object may include an encryptor ENC for encrypting the message using an encryption key $K_e$, a decrypter DEC configured to decrypt the message using a decryption key $K_d$, and an encryption key generator MKG.

According to an embodiment of the present disclosure, the encryptor may include an input queue configured to process input of the message, a GA operator configured to generate a ciphertext through a group action using a one-time public key, and an output queue for processing output of the generated ciphertext.

According to an embodiment of the present disclosure, the GA operator may receive the symmetric key $Q_{AB}$ and the public key $G_B$ of the decryption execution object from the encryption key generator MKG and may generate a ciphertext through the group action.

According to an embodiment of the present disclosure, the group action may be performed according to $Q_{AB}^{-1}G_BQ_{AB}(M) = C$, $Q_{AB}$ may be a symmetric key of the encryption execution object and the decryption execution object, $G_B$ is a public key of the decryption execution object, M may be a message space, and C is a ciphertext space.

According to an embodiment of the present disclosure, the decrypter may include an input queue configured to process input of a ciphertext, a GA operator configured to restore an original message through a group action using a one-time private key, and an output queue configured to process output of the restored original message.

According to an embodiment of the present disclosure, the GA operator may receive a symmetric key $Q_{AB}$ and a private key $H_B$ of the decryption execution object from the encryption key generator MKG and may restore an original message through a group action.

According to an embodiment of the present disclosure, the group action may be performed according to $H_BQ_{AB}Q_{AB}(C) = M$, $Q_{AB}$ is a symmetric key of the encryption execution object and the decryption execution object, $H_B$ may be a private key of the decryption execution object, M may be a message space, and C is a ciphertext space.

According to an embodiment of the present disclosure, the encryption key generator may include a random number generator PRNG configured to generate a one-time pseudorandom number through a key derivation function KDF using a plurality of parameters, and a permutation generator configured to generate a one-time pseudorandom permutation PRP through the key derivation function KDF and to provide the one-time pseudorandom permutation PRP to a key generation module.

According to an embodiment of the present disclosure, the key generation module may include a master key vector module MSK_$\vec{tp}$ corresponding to a vector function indicating a secret permutation group of the decryption execution object, a master key scalar module MSK_$\vec{tv}$ configured to determine a secret permutation to be used for decryption, a symmetric key module MPK configured to generate a symmetric key shared between the encryption execution object and the decryption execution object, and a public key module PK and a private key module SK configured to generate a public key and a private key together, which are used for message encryption and decryption.

According to an embodiment of the present disclosure, the master key vector module MSK_$\vec{tp}$, the master key

scalar module MSK_$\vec{tv}$, and the symmetric key module MPK may generate the same value through a key derivation function KDF or different key values using a method determined therebetween using a plurality of pieces of unique personal identification information as a parameter.

The present disclosure provides an encryption and decryption method including generating a master key using an identification factor by an encryption key generator, generating a symmetric key, and a pair of a private key and a public key, which are required for encryption and decryption, by the encryption key generator, receiving a symmetric key and a public key of a decryption execution object as an encryption key and generating a ciphertext by the encryption execution object, and restoring the symmetric key through the encryption key generator and a ciphertext generated through the private key of the decryption execution object by the decryption execution object.

According to an embodiment of the present disclosure, wherein the identification factor may include at least one of a user identifier including personal information of a user, a terminal device identifier including user terminal information, and a secret permutation generating factor.

According to an embodiment of the present disclosure, the ciphertext may be calculated and generated by the GA operator using the generated symmetric key and the public key of the decryption execution object.

According to an embodiment of the present disclosure, the ciphertext C may be generated according to a group action ($M \times K \to C$) by inserting the encryption key ($K_e$) into an encryption function (E) in the following equation:

$$E\,(M,\,K_e) = Q^{-1}GQ(M) = C.$$

Here, $Q^{-1}GQ$ may be a group action (left multiplication) of a permutation function G, Q, message $M = (m_1 \cdots m_n)$, key $K = (k_1 \cdots k_n)$, and ciphertext $C = (c_1 \cdots c_n)$ is an element of the permutation group G in a message set $M = \{m_1 \cdots m_n\}$ ($M, K, C \in G$).

According to an embodiment of the present disclosure, the ciphertext may be restored and generated according to a group action ($C \times K \to M$) by inserting the decryption key ($K_d$) into a decryption function (D) in the following equation:

$$D\,(C,\,K_d) = HQQ(C) = M.$$

Here, HQQ may be a group action (left multiplication) of a permutation function H, Q, message $M = (m_1 \cdots m_n)$, key $K = (k_1 \cdots k_n)$, and ciphertext $C = (c_1 \cdots c_n)$ is an element of a permutation group G in the message set $M = \{m_1 \cdots m_n\}$ ($M, K, C \in G$).

The present disclosure may provide an encryption system using permutation group-cryptographic technology, including a signature execution object configured to generate a signature when a ciphertext is written, and a verification execution object formed to verify the signature in order to decrypt the ciphertext into an original message, wherein the signature is generated and verified using a symmetric key and an asymmetric key in the form of permutation based on a permutation group.

According to an embodiment of the present disclosure, the signature execution object and the verification execution object may include a singer configured to generate a signature through a group action, a verifier configured to verify the signature through the group action, and an encryption key generator MKG.

According to an embodiment of the present disclosure, the signer may include an input queue configured to process input of a message, a GA operator for generating a signature through a group action using a one-time private key, and an output queue for processing output of the generated signature.

According to an embodiment of the present disclosure, the GA operator of the signer may receive a symmetric key $Q_{AB}$ and a private key $H_A$ of the signature execution object from the encryption key generator MKG and may generate a signature through the group action.

According to an embodiment of the present disclosure, the group action of the signer may be performed according to $Q_{AB}^{-1}H_AQ_{AB}(M) = M_S$, $Q_{AB}$ may be a symmetric key of the signature execution object and the verification execution object, $H_A$ is a private key of the signature execution object, M may be a message ($m_1 \cdots m_n$), and $M_S$ may be a signature ($s_1 \cdots s_n$).

According to an embodiment of the present disclosure, the verifier may include an input queue configured to receive and process a signature, a GA operator configured to generate an original message accepted by verifying a signature through the group action using a one-time public key, and an output queue configured to process output of the accepted original message.

According to an embodiment of the present disclosure, the GA operator of the verifier may receive a symmetric key $Q_{AB}$ and a public key $G_A$ of the signature execution object from the encryption key generator MKG and may check whether the signature is accepted or rejected by verifying the signature through the group action.

According to an embodiment of the present disclosure, the group action of the verifier may be performed according to $G_A Q_{AB} Q_{AB}(M_s)$ = M, $Q_{AB}$ may be a symmetric key of the signature execution object and the verification execution object, $G_A$ may be a public key of the signature execution object, M may be a message ($m_1 \cdots m_n$), and $M_S$ may be a signature ($s_1 \cdots s_n$).

According to an embodiment of the present disclosure, the encryption key generator may include a random number generator PRNG configured to generate a one-time pseudorandom number through a key derivation function KDF using a plurality of parameters, and a permutation generator configured to generate a one-time pseudorandom permutation PRP through the key derivation function KDF and provide the one-time pseudorandom permutation PRP to the key generation module.

According to an embodiment of the present disclosure, the key generation module may include a master key vector module MSK_$\overline{tp}$ corresponding to a vector function indicating a secret permutation group of the signature, a master key scalar module MSK_$\overline{tv}$ configured to determine a secret permutation to be used for decryption, a symmetric key module MPK configured to generate a symmetric key shared between the signature execution object and the verification execution object, and a public key module PK and a private key module SK configured to simultaneously generate a public key and a private key that are one pair of asymmetric keys of the decryption execution object used in message encryption and decryption.

According to an embodiment of the present disclosure, the master key vector module MSK_$\overline{tp}$, the master key scalar module MSK_$\overline{tv}$, and the symmetric key module MPK may generate key values through the key derivation function KDF using one or more pieces of identification information for distinguishing between objects as a parameter.

The present disclosure may provide a ciphertext signature and verification method including generating a master key using an identification factor by an encryption key generator, generating a symmetric key, and a pair of a private key and a public key, which are required for encryption and decryption, by the encryption key generator, receiving the generated symmetric key and a private key of the verification execution object as a signature key and generating a signature, by the signature execution object, receiving a one-time public key of the signature execution object, which is the symmetric key and the verification key, and verifying the generated signature through the signature execution object, by the verification execution object, and accepting and rejecting an original message according to the verification result.

According to an embodiment of the present disclosure, the identification factor may include at least one of a user identifier including personal information of a user, a terminal device identifier including user terminal information, and a secret permutation generating factor.

According to an embodiment of the present disclosure, the signature (Ms) may be generated according to a group action (M $\times$ K $\rightarrow$ S) by inserting a signature key (Ks) into a signature function (S) in the following equation:

$$S(M, K_S) = Q^{-1}HQ(M) = M_s.$$

Here, $Q^{-1}HQ$ may be a group action (left multiplication) of a permutation function H, Q, message M = ($m_1 \cdots m_n$), key K = ($k_1 \cdots k_n$), and signature $M_s$ = ($s_1 \cdots s_n$) may be elements of a permutation group G in the message set M={$m_1 \cdots m_n$} (M,K,S $\in$ G).

According to an embodiment of the present disclosure, the signature may be verified and generated according to a group action (S $\times$ K $\rightarrow$ S) by inserting a verification key $K_V$ into a verification function V in the following equation:

$$V(S, K_v) = GQQ(M_s) = M.$$

Here, GQQ may be a group action (left multiplication) of a permutation function G, Q, message M = ($m_1 \cdots m_n$), key K = ($k_1 \cdots k_n$), and signature $M_s$ = ($s_1 \cdots s_n$) may be elements of the permutation group G in the message set M={$m_1 \cdots m_n$} (M,K,S $\in$ G).

BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a conceptual diagram showing an example of a cipher (K, E, C) space of an RSA encryption system;
FIG. 2 is a conceptual diagram showing an example of a group action;
FIG. 3 is a conceptual diagram showing an example of a cipher (K, E, C) space of an inventive system;
FIG. 4 is a conceptual diagram of an encryption communication system;
FIG. 5 is a diagram showing the configuration of a system for encryption/decryption;
FIG. 6 is a diagram showing the configuration of an encryptor;

FIG. 7 is a diagram showing the configuration of a decrypter;

FIG. 8 is a conceptual diagram of an encryption key generator;

FIG. 9 is a conceptual diagram showing an example of an operation of a cipher;

FIG. 10 is a flowchart of an encryption/decryption procedure;

FIG. 11 is a conceptual diagram showing a set up step as a first step of encryption/decryption;

FIG. 12 is a conceptual diagram showing a key generation step as a second step of encryption/decryption;

FIG. 13 is a conceptual diagram showing a ciphertext generating step as a third step of encryption;

FIG. 14 is a conceptual diagram showing a message generating step as a third step of decryption;

FIG. 15 is a diagram showing the configuration of a system for signature/verification;

FIG. 16 is a diagram showing the configuration of a signer;

FIG. 17 is a diagram showing the configuration of a verifier;

FIG. 18 is a flowchart of a signature/verification procedure;

FIG. 19 is a conceptual diagram showing a set up step as a first step of signature/verification;

FIG. 20 is a conceptual diagram showing a signature/verification step as a second step;

FIG. 21 is a conceptual diagram showing a signature generating step as a fourth step;

FIG. 22 is a conceptual diagram showing message reception/rejection as a fourth step of a verification step;

FIG. 23 is a diagram showing the configuration of an encryptor system of a signed message;

FIG. 24 is a diagram showing the configuration of a decrypter system of a signed message;

FIG. 25 is a conceptual diagram showing encryption of a signed message;

FIG. 26 is a flowchart showing encryption and decryption and verification procedures of a signed message; and

FIG. 27 is a conceptual diagram showing decryption of a signed ciphertext.

## DETAILED DESCRIPTION OF THE INVENTION

Hereinafter, the present disclosure will be described in detail by explaining exemplary embodiments of the present disclosure with reference to the attached drawings. The same reference numerals in the drawings denote like elements, and a redundant description thereof will be skipped.

As used herein, the suffixes "module" and "unit" are added or used interchangeably to facilitate preparation of this specification and are not intended to suggest distinct meanings or functions.

In the following description of the embodiments of the present disclosure, a detailed description of known technology will be omitted to avoid obscuring the subject matter of the present disclosure.

The accompanying drawings are intended to facilitate understanding of the embodiments disclosed herein, and should not be construed as including all modifications, equivalents and substitutes included within the spirit and scope of the present disclosure.

It will be understood that, although the terms "first," "second," "third," etc. may be used herein to describe various elements, these elements should not be limited by these terms.

These terms are only used to distinguish one element from another element.

It will be understood that when an element is referred to as being "on", "connected to" or "coupled to" another element, it may be directly on, connected or coupled to the other element, or intervening elements may be present. In contrast, when an element is referred to as being "directly on," "directly connected to" or "directly coupled to" another element or layer, there are no intervening elements present.

A singular expression includes a plural expression unless clearly specified otherwise in context.

In this specification, the term "include" or "have" is intended to indicate that characteristics, figures, steps, operations, constituents, and components disclosed in the specification or combinations thereof exist. The term "include" or "have" should be understood as not pre-excluding possibility of existence or addition of one or more other characteristics, figures, steps, operations, constituents, components, or combinations thereof.

Execution objects (encryption execution object, decryption execution object, signature execution object, verification execution object, etc.) and components constituting the execution object (encryptor, decrypter, signer, verifier, encryption key generator, etc.) described in this specification may have physically separated structures or may be only functionally separated.

When the execution objects are only functionally separated, these execution objects and components may be included in one controller.

The controller may include hardware such as an application programming interface (API) for performing a specific function in a distributed application program environment such as a single system or a cloud service, a module for performing a specific function, a component, a chip or a terminal, or software such as an application or a program.

## I. Definition of terms

a) Method of expressing and processing information

Information to be transmitted through a computer or communication system takes various forms such as numbers, characters, pictures, videos, and software, but is handled in binary, that is, byte units composed of bits in a system. The information may be converted into code form such as ASCII and UNICODE, may be recognized by an application program in the system, and as such, people receive the information in the form of numbers, characters, pictures, etc. again.

In general, a message refers to information that people want to transfer to the other party through a computer or a communication system and is treated in a message unit in a system, such as a byte, in the system as described above, and entire information in the system is converted into a processable column in a message unit in one system.

That is, the message to be transferred may be represented in a message unit and a list of messages represented in the message unit may be referred to as a message set M.

For example, when the message unit is bit, M = {0,1} may be satisfied and the message may be represented by a column of the message unit, such as 00110101, and when the message unit is byte, M = {0,1, ... 255} may be satisfied, the message may be represented by 64 68 72 82 (in decimal representation).

In this case, expressing this mathematically, the message set M may be represented by $M = \{m_1,..., m_i,..., m_n\}$, elements of M may be $m_i$, $1 \le i \le n$ may be satisfied, and the number of the elements of the set M may be represented by $|M| = n$.

When the elements of the message set M are listed in order and indices of the elements listed in order are represented as a set, $I_M = \{1, ..., i, ..., n\}$ may be satisfied and is referred to as an index set for the message set M, and an $i^{th}$ element of the index set may be $I_M(i) = m_i$.

In this case, the index set of messages may be represented by $I_M : I \to M$ and it may be said that there is a morphism from the index set I to the message set M.

Permutation $P = (p_1, ..., p_i, ..., p_n)$ may be a permutation of a set $S = \{1, 2, ..., n\}$ including n naturals (Z) and $1 \le pi \le n$ may be satisfied.

For example, permutation $\sigma - \begin{pmatrix} 1 & 2 & 3 & 4 & 5 \\ 2 & 4 & 2 & 5 & 1 \end{pmatrix}$ may be represented, may be a permutation of the set S= {1, 2, 3, 4, 5}, and may be represented by bijection such as $\sigma : S \to S$, that is, a function.

In other words, $\sigma(1)=3, \sigma(2)=4,..., \sigma(5)=1$ may be satisfied, and in general, a permutation of the set S = {x1, x2 ,... ,xn} may be represented by $\sigma - \begin{pmatrix} x_1 & \cdots & x_n \\ \sigma(x_1) & \cdots & \sigma(x_n) \end{pmatrix}$.

When represented functionally, a permutation may represent correspondence between X and Y in bijection F: $X \to Y$ from domain X to codomain Y, and when represented in terms of the meaning of a set, the permutation may represent an arrangement order of elements of an arbitrary set.

A permutation of an arbitrary set including n elements may also be a permutation of n numbers or characters, which may also be applied to the aforementioned message set M in the same way.

Accordingly, it may be possible to represent all messages by a permutation of the message set M.

A permutation may be changed to different permutations depending on arrangement of elements of an arbitrary set, and permutations in all the cases may be collected to form a permutation group. That is, the permutation group may be a set including the permutations in all the cases of an arbitrary set as elements.

The permutation group $G = \{\sigma | \sigma: S \to S$, $\sigma$ being a permutation of $S = \{x_1, x_2,...,x_n\}\}$ may be satisfied, and a permutation group of all permutations of the set M = {1, 2,... n} may be a symmetric group Sym(M) (all bijections being a symmetric group).

That is, if M = {1, 2, ..., n}, Sym(M) for n characters may be represented by $S_n$.

If permutation $\sigma, \pi \in G$ (permutation group), the result of composition of permutation may also be a permutation, and a permutation of the result may also be elements of G. That is, the permutation group G may be closed for the composition of permutation.

The number of permutations constituting G may be $|G| = n!$.

A group action may be a method of arranging elements of the set S by elements (permutation: P) of the permutation group G and may function as a kind of function. In other words, when the group action of the permutation P is applied to elements of the set S, this means that the elements of the set S may be rearranged by the permutation P. That is, an operation for changing arrangement of the elements of the set S may be referred to as a group action.

(That is, the elements of S are rearranged using a method of the permutation P for the set S, that is, an index set Is of S is changed.)

In the case of G: Permutation Group and M: non-empty set, the group action of the permutation group G for the set M may be a function f : G x M → M, which satisfies the following three properties.

* f(1, x) = x (an identity element of the group G being 1) for all elements x belonging to the set M
* y = x$^{-1}$ satisfying f(x, y) = 1, there is an inverse element of x when x, y $\in$ G
* f(g, f(h, x)) = f(gh, x) (which satisfies the associative law, left multiplication) for all the elements x in all permutations g, h, and M belonging to G

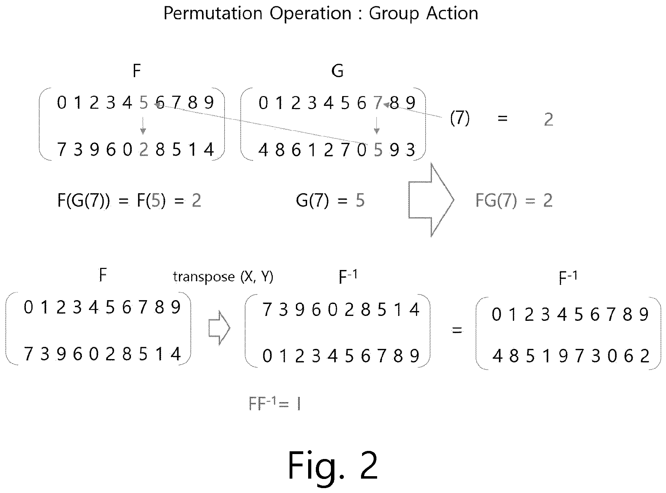

FIG. 2 shows an example of a group action.

A degree of G may be the number |M| of elements of the set M constituting G, and an order of G may be |G| that is the number of elements (cardinality) of G. That is, the degree of group G for the set M including n elements may be n, and the order of the group G may be n!.

b) Cryptology and Inventive System

Pseudorandom Number Generator (PRNG): A random number generated using an algorithm may be a pseudorandom number in order to imitate a random number, and in this case, an algorithm for generating the pseudorandom number may be referred to as a pseudorandom number generator (PRNG). This may be represented by the following function F : X → Y over (X,Y). An arbitrary pseudorandom number Y for an arbitrary input value X may be generated.

Pseudorandom Function (PRF): A pseudorandom number sequence may always be generated by applying an arbitrary input value derived based on the PRNG (pseudorandom number function). This may be represented by the following function F : K $\times$ X → Y over (k, X, Y).

Pseudorandom Permutation (PRP): A pseudorandom number sequence may be generated using a similar method to the PRF, but one-to-one morphism that always operates as the same domain may be present, and an efficient inverse function D(k,X) may be present. When it is impossible to identify a sequence generated from the PRP based on the random number generated by the PRNG, this may be referred to as secure PRP. The secure PRP defined for sufficiently large X may be secure PRF (pseudorandom number permutation).

This may be represented by the following function E: K $\times$ X → X over (k,X).

Trapdoor Function (TDF): A trapdoor function (TDF) (secret passage one-way function) is one type of one-way function. In general, it is difficult to obtain an inverse of a function like the one-way function, but the TDF is a function, an inverse of which is easily obtained when there is special information called a trapdoor. The TDF may be mathematically defined as follows. When a secret value y is present, if there is no y for x, it may be difficult to obtain f(x), but when y is given, if it is possible to easily obtain x in f(x), a function f may be TDF.

Cipher = (G, E, D), and cipher space= (k, M, C): A cipher may be an algorithm for performing encryption and decryption and may be a kind of function operating in a cipher space (K, M, C). The cipher may include three algorithms (functions) such as G, E, and D. These may be represented by the following abbreviations.

G: Key generation function
E: Encryption function
D: Decryption function
K: Key space
M: Message space
C: Ciphertext space

A magic key generator (MKG) may be a key management device for processing user identification and registration, key generation, and distribution, which are required for encryption/decryption using an encryption key generator by a user. The MKG may also be installed in the same system as the encryptor or the decrypter or may be installed in other third party systems and may be operatively associated therewith. A safe information channel may be ensured through user authentication to permit only an allowable participant to access the MKG.

A secret permutation group (SPG) may refer to a subset of all permutation groups G in the message set M, permutations forming the subset may be referred to a secret permutation candidate (SPC), and in this case, one candidate that is particularly determined among SPCs may be referred to as a secret permutation (SP). FIG. 3 shows an example of SPG and SP.

**II. System structure**

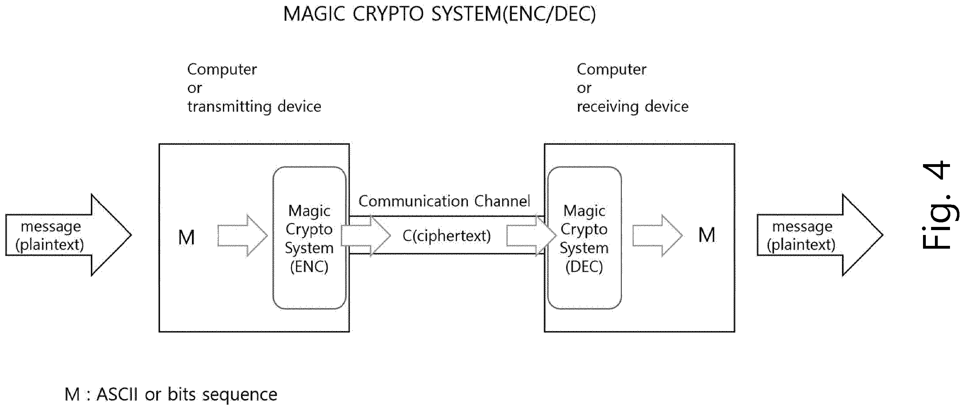

FIG. 4 is a conceptual diagram showing an inventive system according to an embodiment. The system may include a communication channel for transmitting a ciphertext and two terminals connected thereto, and each terminal may have an encryption key $K_e$ and decryption key $K_d$ related to encryption and decryption. The communication channel may include a general transmitting cable and transmitting device, and FIG. 4 shows an example of one-way communication, but it may also be possible to perform two-way communication through an operation in an opposite direction in the same way.

1. Encryption/decryption system

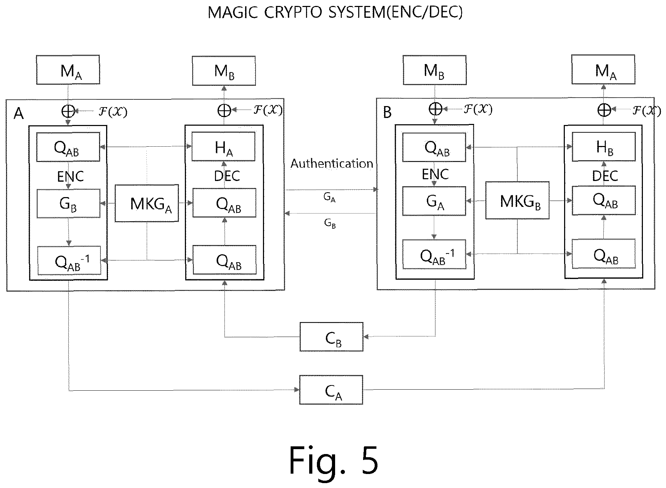

Each of transmitting and receiving terminals of FIG. 4 may include an encryptor ENC, a decrypter DEC, and an encryption key generator MKG, as shown in FIG. 5.

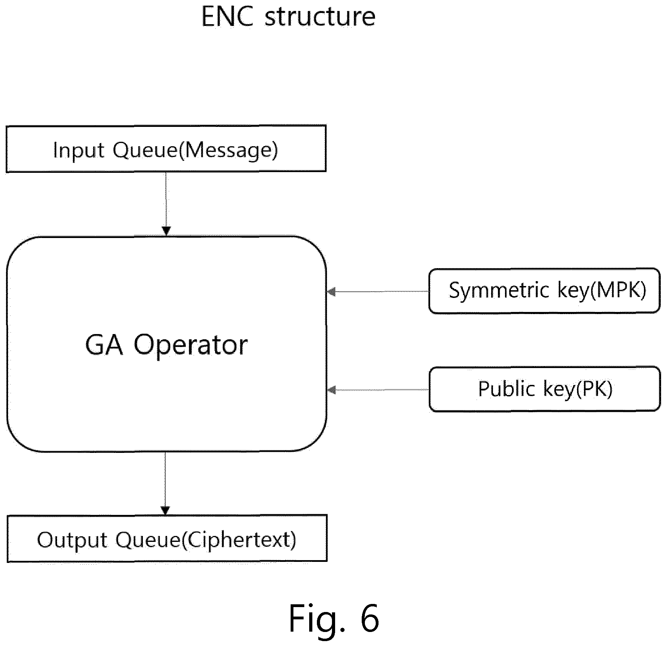

As shown in FIG. 6, the encryptor ENC may include an input queue for processing input of a message, a GA operator for generating a ciphertext through a group action using a one-time public key via an algorithm according to an embodiment of the present disclosure, and an output queue for processing output of the generated ciphertext.

The GA operator may receive a symmetric key $Q_{AB}$ of a transceiving terminal and a public key $G_B$ of a receiving terminal from the encryption key generator MKG as input of the message and may generate the ciphertext through a group action. The group action processed by the GA operator may be $Q_{AB}^{-1}G_BQ_{AB}(M) = C$.

According to another embodiment, in order to remove the case in which a message input to a transmitting terminal contains duplicate character strings although there is no significant effect on the cipher complexity, an XOR operator may pre-process a diffusion function $F(x)$, and the message queue of the encryptor may receive the pre-processed message and may generate a ciphertext.

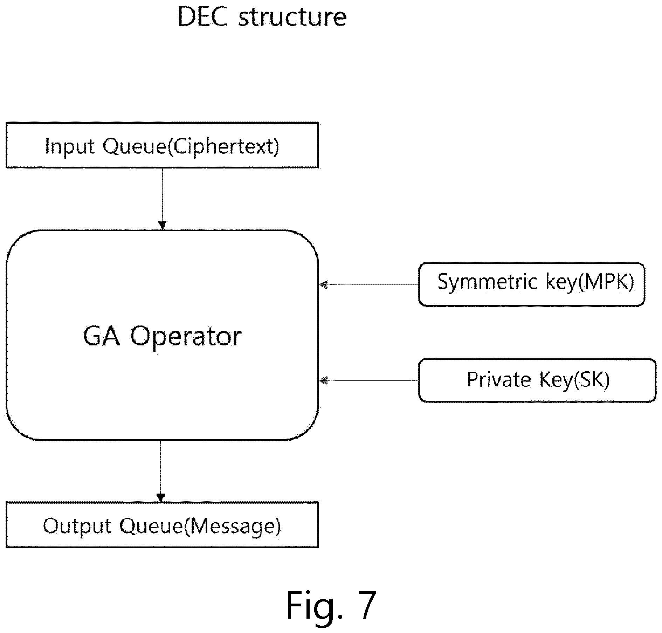

As shown in FIG. 7, the decrypter DEC may include an input queue for processing input of a ciphertext, a GA operator for restoring an original message through the group action using a one-time private key via an algorithm according to an embodiment of the present disclosure, and an output queue for processing output of a restored original message.

The GA operator may receive a symmetric key $Q_{AB}$ of a transceiving terminal and a private key $H_B$ of a receiving terminal from the encryption key generator MKG as input of the ciphertext and may restore the original message through the group action.

The group action processed by the GA operator may be $H_BQ_{AB}Q_{AB}(C) = M$.

According to another embodiment, when a diffusion function is applied to the transmitting terminal, the same diffusion function $F(x)$ as that of the transmitting terminal, to which the message restored by the decrypter is applied, may be post-processed through the

XOR operator and the original message may be restored.

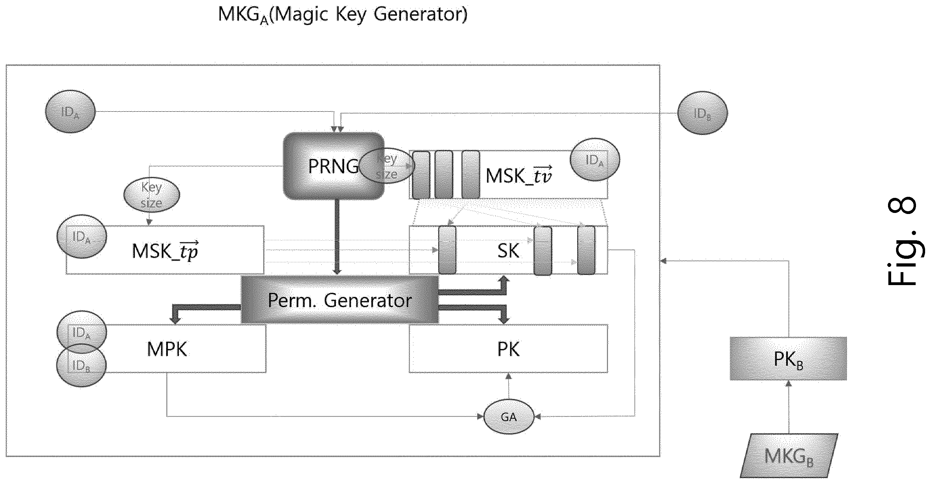

As shown in FIG. 8, the encryption key generator MKG may include a random number generator PRNG, a permutation generator, a plurality of key generation modules MSK_$\vec{tv}$, MSK_$\vec{tp}$, MPK, SK, and PK, and a GA operator.

The random number generator PRNG may generate a one-time pseudorandom number through a key derivation function KDF using a plurality of parameters, such as a participant-specific personal identifier ID, device ID, event, and time, which only pre-registered sending and receiving participants are capable of knowing. The generated random number may be provided to the permutation generator and the key generation module.

The permutation generator may generate one-time pseudorandom permutation PRP through a random number generator and a unique key derivation function KDF. The generated random number sequence may be provided to each key generation module.

The key generation modules may include a master key vector module MSK_$\vec{tp}$ corresponding to a vector function indicating a secret permutation group of a receiver, a master key scalar module MSK_$\vec{tv}$ for determining secret permutation to be received, a symmetric key module MPK for generating a symmetric key shared by only a sender and a receiver, and a public key module PK and a private key module SK for generating a pair of keys for each transmission and reception event. Master key modules and symmetric key modules of the key generation module may generate different key values each time through the random number generator or the permutation generator based on a key derivation function KDF using multiple unique personal identification information, may store the keys in an internal key storage, and may distribute the generated key values to the private key module SK and the public key module PK in order to generate a private key and a public key. In addition, the generated key values may be distributed to an encryptor and a decrypter of a corresponding terminal that requests a key.

The private key module SK may generate a private key. The private key may be generated by arranging random numbers generated by the master key scalar module at a position determined by the master key vector module and then arranging random number sequences provided by the permutation generator at the remaining position.

The GA operator in the encryption key generator may generate a public key through the symmetric key and the private key differently from the case in which a GA operator of the encryptor or the decrypter performs an operation required to generate the ciphertext and the original message. When a key generated by the private key module SK is H, a key generated by the symmetric key module MPK is Q, and a public key operated and generated by the GA operator is G, the group action performed by the GA operator may be $G = Q^{-1}H^{-1}Q^{-1}$, the public key G calculated as the operation result may be output to and stored in the public key module PK, and may be distributed to a corresponding encryptor or decrypter.

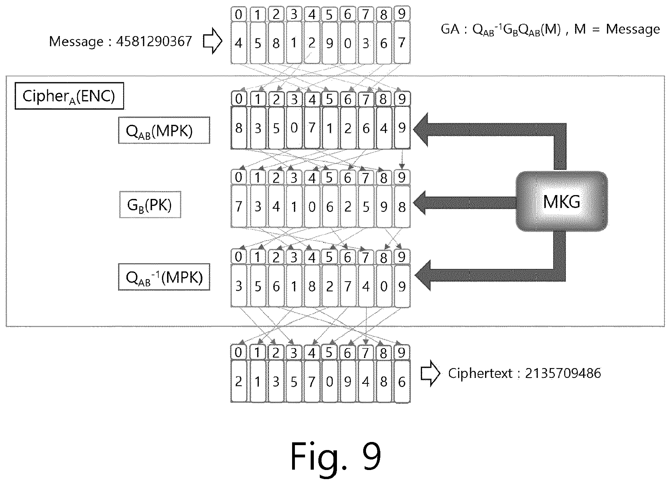

Hereinafter, an operation of an encryptor according to an embodiment will be described with reference to FIG. 9.

When the message set M includes a number of 0 to 9, that is, when |M| = 10, a user A intends to transmit 10 numerical messages of 4581290367 to a user B. FIG. 9 shows the case in which ciphertext 5301689742 is generated through an encryptor of a terminal of the user A.

2. Encryption/decryption method and procedure

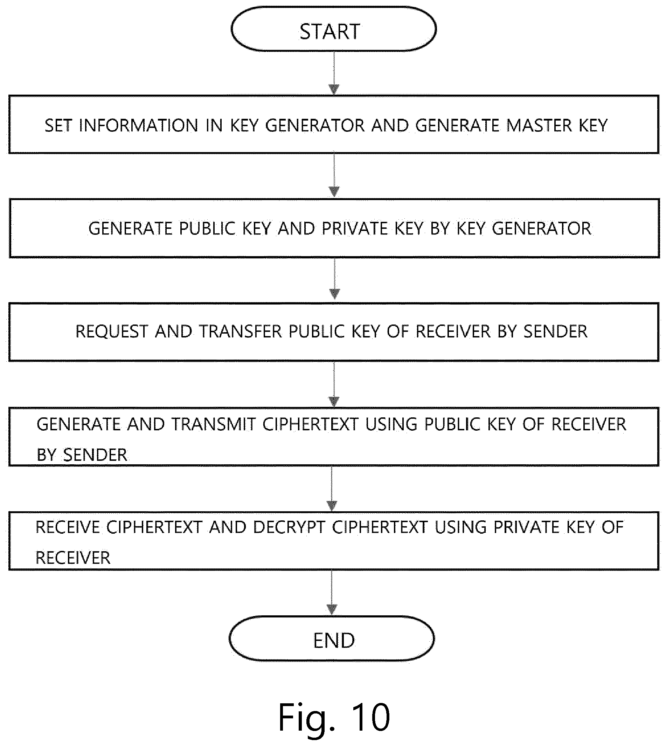

A permutation group-based message encryption transmission method may be performed through a method and a procedure shown in FIG. 10 according to the above embodiment of the present disclosure.

In order to transmit a message using a system according to an embodiment, a transmitting and receiving participant needs to be approved as a participant that is allowed by pre-registering personal identification information, etc. in the system.

Thus, a first step of the transmission method according to an embodiment may be a setup step in which personal identification information such as user identifier (phone number, user id, email address etc.), terminal device identifier (device id, MAC address, ip address, faceid, fingerprint etc.), and secret permutation (Secret Permutation) generating factors is registered in the encryption key generator MKG in order to identify a participating object, and the encryption key generator MKG may generate an identification number, a master key, etc. of a registered object based on this information.

The master key may be a vector function for specifying secret permutation candidates (SPCs) of a permutation group of all messages and the key vector function T may include a pair of vectors (tp,tv) and may satisfy $T \subset I_M \times M$. tp of the master key T may be generated or registered at the time of setting, a function value tv of the master key T may be determined when encryption is executed, may designate a specific secret permutation (SP) among the secret permutation candidates (SPCs), and may generate a private key of a corresponding participating object in this regard.

A second step may a key generating step for encryption by an encryption key generator and may generate a symmetric key, and a pair of private key and public key, required for encryption and decryption. The symmetric key that only transmitting and receiving parties are capable of knowing through pre-registered information of only the transmitting and receiving participating objects may be generated. A secret permutation (SP) may be designated by allocating a one-time function value to a master key (function) generated in a set up step, and therewith, a private key may be generated based on personal identification information pre-registered in the set up step. The public key may be generated using the group action of the generated symmetric key and private key.

In a third step, a sender may request a public key of a receiver, which is an encryption key, and may obtain the public key through the encryption key generator in order to generate a ciphertext. The symmetric key may already be owned by each transceiving terminal through the second step. In this case, the keys of the corresponding participating objects may already be generated in the key generating step that is the second step, and thus may be easily acquired. The public key of the receiver and the symmetric key that is already owned by the receiver may be calculated to generate the ciphertext through the GA operator. This procedure may be mathematically represented as follows.

Message M = $(m_1 ... m_n)$, key K = $(k_1 ... k_n)$, and ciphertext C = $(c_1 ... c_n)$ may each be an element of the permutation group G as a permutation in the message set M={$m_1 ... m_n$} and may be the same as E : M ×K → C, M, K, C ∈ G, and the encryption key $K_e$ may be a pair of (MPK, PK) and may be represented by a pair of permutation functions (Q, G). That is, $K_e$=(Q, G). Encryption function E may be represented by E=$Q^{-1}GQ$ through left multiplication as the group action of permutation functions Q and G constituting $K_e$. Thus, E(M, $K_e$) = $Q^{-1}GQ$(M) = C.

When D = $d_1 d_2 ... d_k$: message sequence D is a continuous message character string including $d_i$ as elements of the message set M, if the result ciphertext string is x = $x_1 x_2 ... x_k$,

In this case, E($d_i$, $K_e$) = $Q^{-1}GQM((d_i))$ = $x_i$. If R = $Q^{-1}$,

when $$G=\begin{pmatrix} 1 & \cdots & n \\ g_1 & \cdots & g_n \end{pmatrix}, \quad Q=\begin{pmatrix} 1 & \cdots & n \\ q_1 & \cdots & q_n \end{pmatrix}, \quad R=\begin{pmatrix} 1 & \cdots & n \\ r_1 & \cdots & r_n \end{pmatrix}, \text{ and } M=\begin{pmatrix} 1 & \cdots & n \\ m_1 & \cdots & m_n \end{pmatrix},$$

$$Q^{-1}GQ(M(d_i))=\begin{pmatrix} 1 & \cdots & n \\ r_1 & \cdots & r_n \end{pmatrix}\begin{pmatrix} 1 & \cdots & n \\ g_1 & \cdots & g_n \end{pmatrix}\begin{pmatrix} 1 & \cdots & n \\ q_1 & \cdots & q_n \end{pmatrix}\begin{pmatrix} 1 & \cdots & n \\ m_1 & \cdots & m_n \end{pmatrix}(d_i)=x_i$$

is satisfied, E may be calculated through left multiplication.

In a fourth step, a private key of a receiver as an encryption key may be obtained through an encryption key generator by the receiver in order to restore the received ciphertext. Each transceiving terminal already owns the symmetric key through the second step. In this case, keys of the corresponding participating objects may already be generated in the key generating step that is the second step, and thus may be easily obtained. The private key of the receiver and the already owned symmetric key may be calculated through the GA operator to restore an original message. This procedure may be represented as follows.

Message $M = (m_1 ... m_n)$, key $K = (k_1... k_n)$, and ciphertext $C = (c_1 ...c_n)$ may each be an element of the permutation group G as a permutation in the message set message set $M=\{m_1 ... m_n\}$ and may be the same as $D : C \times K \to M$, M, K, and $C \in G$, and the decryption key $K_d$ may be a pair of (MPK, SK) and may be represented by a pair of permutation functions (Q, H). That is, $K_d=(Q, H)$.

Decryption function D may be represented by D=HQQ through left multiplication as the group action of permutations Q and H constituting $K_d$. Thus, $D(C, K_d) = HQQ(C) = M$.

When $X = x_1 x_2 ...x_k$ ciphertext sequence X is a continuous ciphertext character string including $x_i$ as elements of the ciphertext set C, if $D=d_1 d_2 ... d_k$ : message sequence D is a continuous message character string including $d_i$ as elements of the message set M, $D(x_i, K_d) = HQQ(C(x_i)) = d_i$ may be satisfied.

When
$$H=\begin{pmatrix} 1 & \cdots & n \\ h_1 & \cdots & h_n \end{pmatrix}, \qquad Q=\begin{pmatrix} 1 & \cdots & n \\ q_1 & \cdots & q_n \end{pmatrix}, \quad \text{and} \quad C=\begin{pmatrix} 1 & \cdots & n \\ c_1 & \cdots & c_n \end{pmatrix},$$

$$HQQ(C(x_i))=\begin{pmatrix} 1 & \cdots & n \\ h_1 & \cdots & h_n \end{pmatrix}\begin{pmatrix} 1 & \cdots & n \\ q_1 & \cdots & q_n \end{pmatrix}\begin{pmatrix} 1 & \cdots & n \\ q_1 & \cdots & q_n \end{pmatrix}\begin{pmatrix} 1 & \cdots & n \\ c_1 & \cdots & c_n \end{pmatrix}(x_i)=d_i$$

may be satisfied, and D may be calculated through left multiplication.

3. Embodiment of message encryption/decryption transmission method

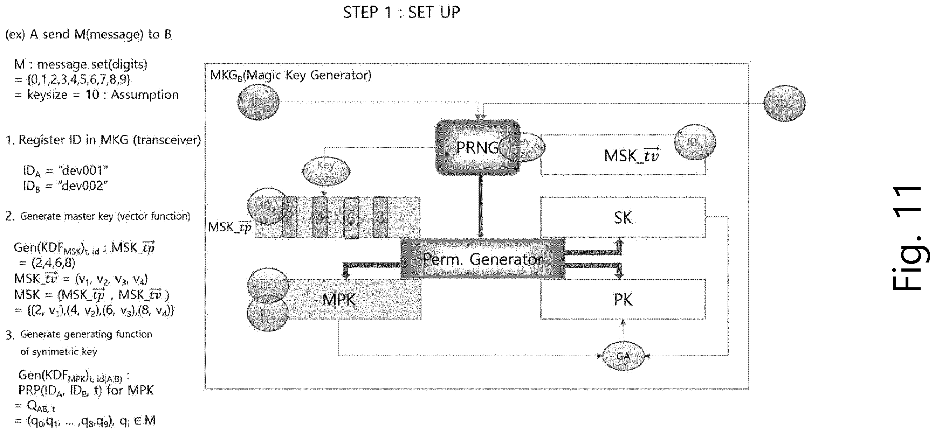

FIGS. 11 to 14 are diagrams showing examples of steps of a message encryption transmission method according to an embodiment of the present disclosure.

In the examples, a terminal A may receive a digit string "4581290367" including 10 numbers from the message set including numbers of 0 to 9 as elements, may generate a ciphertext, and may transmit the ciphertext to a terminal B, the terminal B may receive the ciphertext, and may restore an original message, and FIGS, 11 to 14 show this procedure for each step in detail.

FIG. 11 shows the case in which IDs of the transmitting terminal A and the receiving terminal B are registered in the encryption key generator, a master private key vector function $\{(2, v_1), (4, v_2), (6, v_3), (8, v_4)\}$ is generated therethrough, and a master public key generating function is set for transmission and reception in the first step, that is, the set up step.

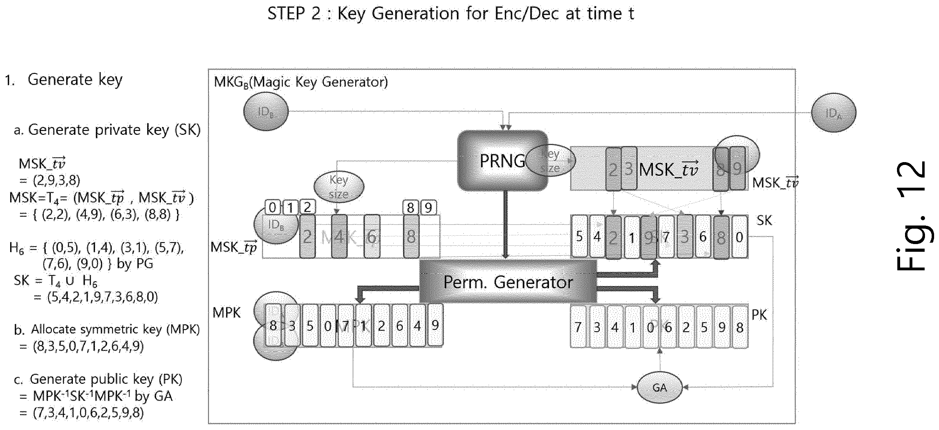

FIG. 12 shows a method of allocating a vector value of a master key vector function and generating a private key therethrough in the second step, that is, the key generating step. In addition, the drawing shows a method of allocating a function value to a symmetric key generating function through a permutation generator and a method of generating a private key and a public key through a GA operator therewith.

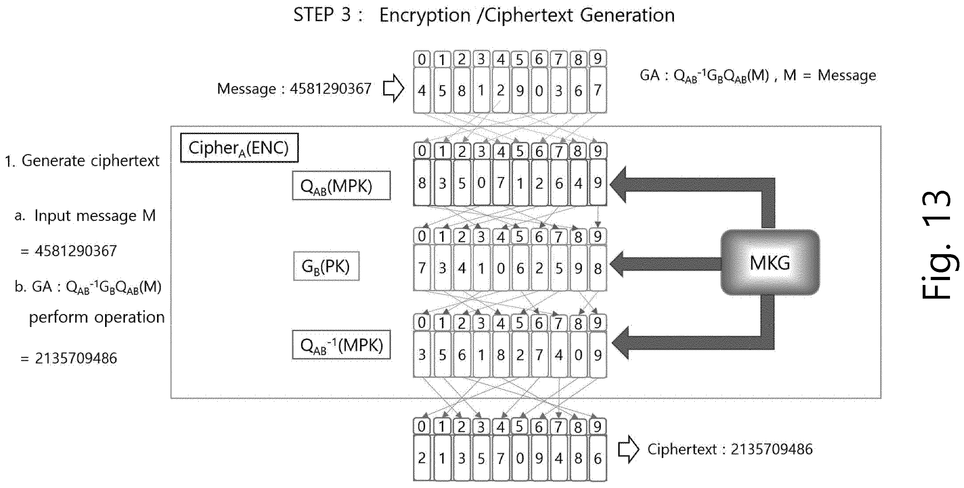

FIG. 13 shows an example of an operating method through the group action by a GA operator through the encryption keys MPK, SK, and PK generated through the first and second steps and a method of generating a ciphertext in the third operation, that is, the ciphertext generating step.

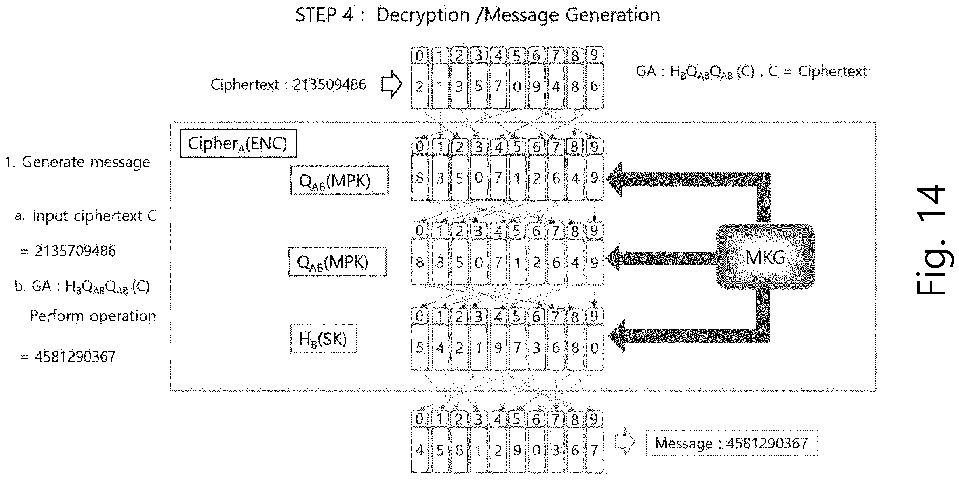

FIG. 14 shows an example of an operating method through a group action by a GA operator through the encryption keys MPK, SK, and PK generated through the first and second steps and a method of restoring the received ciphertext into an original message in the fourth step, that is, the ciphertext decryption step.

4. Signature/verification system

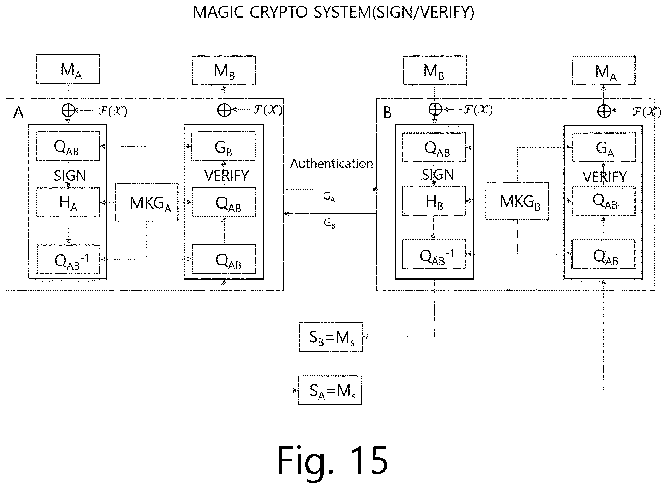

Each transceiving terminal of an electronic signature system may functionally operate in the same way using the same structure as the aforementioned encryptor or decrypter described with regard to the above embodiment but may be different from the encryptor and the decrypter in that a different key and different input are used. Each of transmitting and receiving terminals of the signature/verification system may include a signer SIGN, a verifier VERIFY, and an encryption key generator MKG, as shown in FIG. 15.

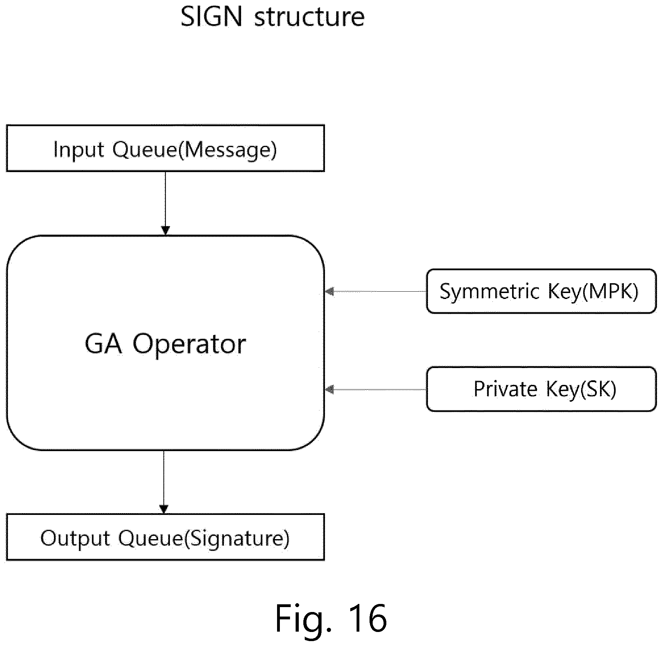

As shown in FIG. 16, the signer SIGN may include an input queue for processing input of a message, a GA operator for generating a signature through a group action using a one-time private key via an algorithm according to an embodiment of the present disclosure, and an output queue for processing output of the generated signature.

The GA operator may receive the symmetric key $Q_{AB}$ of the transceiving terminal and the private key $H_A$ of the transmitting terminal from the encryption key generator MKG using a message as input to generate a signature through a group action. The group action processed by the GA operator may be $QAS^{-1}H_AQ_{AB}(M) = M_s$.

According to another embodiment, in order to remove the case in which a message input to a transmitting terminal contains duplicate character strings although there is no significant effect on cipher complexity, an XOR operator may pre-process a diffusion function F(x), and the message queue of the signer may receive the pre-processed message and may generate a signature.

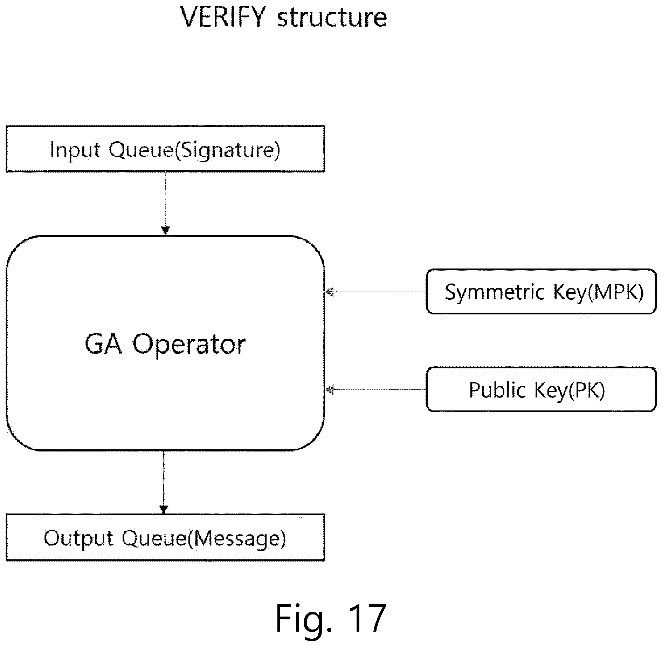

As shown in FIG. 17, the verifier VERIFY may include an input queue for receiving and processing a signature, a GA operator for generating an original message accepted by verifying the signature through the group action using a one-time public key via an algorithm according to an embodiment, and an output queue for processing output of the verified/accepted original message.

The GA operator may receive the symmetric key $Q_{AB}$ of the transceiving terminal and the public key $G_A$ of the transmitting terminal from the encryption key generator MKG using a signature as input, may verify the signature through the group action, may check whether the original message is accepted or rejected, and may verify the original message.

The group action processed by the GA operator may be $G_AQ_{AB}Q_{AB}(M_s) = M$.

According to another embodiment, when a diffusion function is applied to the transmitting terminal, the same diffusion function F(x) as that of the transmitting terminal, to which the message verified by the verifier is applied, may be post-processed through the XOR operator and the original message may be restored.

As shown in FIG. 8, the encryption key generator MKG included in the signature/verification system of FIG. 15 may be the random number generator PRNG, the permutation generator, the plurality of key generation modules $MSK\_\vec{tv}$, $MSK\_\vec{tp}$, MPK, SK, and PK, and the GA operator (GA operator), and may provide the same structure and function and operate in the same way as the encryptor and the decrypter.

5. Signature/verification method and procedure

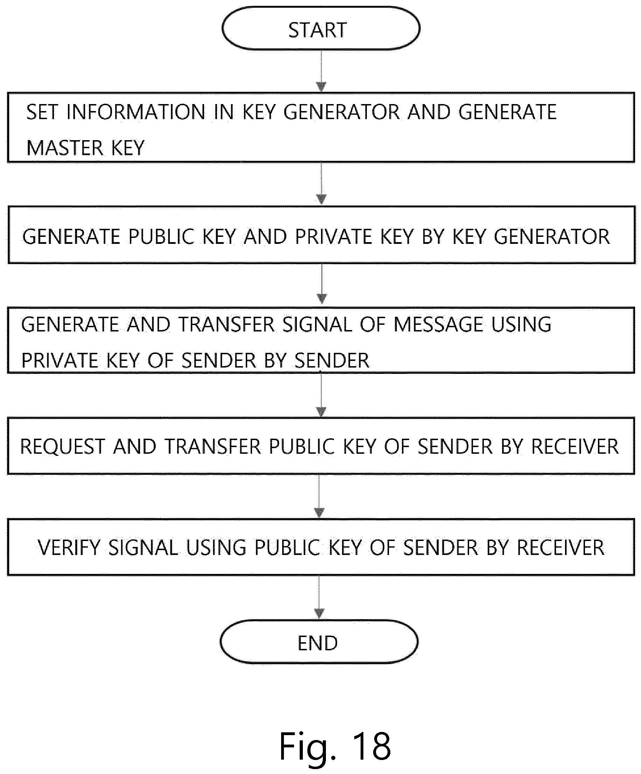

According to the above embodiment of the present disclosure, a signature/verification method may be performed using a permutation group-based message encryption and decryption algorithm using a method and a procedure shown in FIG. 18.

The signature and verification method of a message according to an embodiment of FIG. 18 may be performed through a procedure including the fourth step, and a method of registering and setting the transceiving participating object in the first step and a method and a procedure of generating a key in the second step may be performed in the same way as the aforementioned method and procedure described with reference to the aforementioned encryption and decryption method according to an embodiment.

In the third step, in order to generate a signature, the sender may request and acquire a private key of the sender, which is a signal key, through the encryption key generator. The symmetric key may be already owned by each transceiving terminal through the second step. In this case, keys of the corresponding participating objects may be already generated in the key generating step that is the second step, and may be easily obtained. The private key of the sender and the already owned symmetric key may be operated through the GA operator to generate a signature. This procedure may be mathematically represented as follows.

Message $M = (m_1... m_n)$, key $K = (k_1... k_n)$, and signature $M_s = (s_1... s_n)$ may each be an element of the permutation group G as a permutation in the message set $M=\{m_1 ... m_n\}$ and may be the same as $S : M \times K \to S$, $M,K,S \in G$, and the signature key $K_s$ may be a pair of (MPK, SK) and may be represented by a pair of permutation functions (Q, H). That is, $K_s=(Q, H)$. Signature function S may be represented by $S=Q^{-1}HQ$ through left multiplication as a group action of permutation functions Q and G constituting $K_s$. Thus, $S(M, K_S) = Q^{-1}HQ(M) = M_s$.

When $D = d_1d_2 ...d_k$: message sequence D is a continuous message character string including $d_i$ as elements of the message set M, if the result signature string is $X = x_1x_2 ...x_k$,

In this case, $S=(d_i, K_s) = Q^{-1}HQM((d_i)) = x_i$. If $R=Q^{-1}$,

$$H=\begin{pmatrix} 1 & \cdots & n \\ h_1 & \cdots & h_n \end{pmatrix}, \quad Q=\begin{pmatrix} 1 & \cdots & n \\ q_1 & \cdots & q_n \end{pmatrix}, \quad R=\begin{pmatrix} 1 & \cdots & n \\ r_1 & \cdots & r_n \end{pmatrix}, \quad M=\begin{pmatrix} 1 & \cdots & n \\ m_1 & \cdots & m_n \end{pmatrix}, \text{ and}$$

when

$$Q^{-1}HQ(M(d_i))=\begin{pmatrix} 1 & \cdots & n \\ r_1 & \cdots & r_n \end{pmatrix}\begin{pmatrix} 1 & \cdots & n \\ h_1 & \cdots & h_n \end{pmatrix}\begin{pmatrix} 1 & \cdots & n \\ q_1 & \cdots & q_n \end{pmatrix}\begin{pmatrix} 1 & \cdots & n \\ m_1 & \cdots & m_n \end{pmatrix}(d_i)=x_i$$

is satisfied, S may be calculated through left multiplication.

In the fourth step, the receiver may obtain a one-time public key of a sensor, which is a verification key, through the encryption key generator in order to verify the received signature. The symmetric key may be already owned by each transceiving terminal through the second step. In this case, keys of the corresponding participating objects may already be generated in the key generating step that is the second step, and thus may be easily obtained. The private key of the sender and the already owned symmetric key may be calculated through the GA operator to verify the signature and the verified original message may be accepted or rejected. This procedure is mathematically represented as follows.

Message $M = (m_1 \ldots m_n)$, key $K = (k_1 \ldots k_n)$, and signature $M_s = (s1 \ldots s_n)$ may each be an element of the permutation group G as a permutation in the message set $M=\{m_1 \ldots m_n\}$ and may be the same as $V : S \times K \rightarrow S$, M, K, and $S \in G$, and the verification key $K_v$ may be a pair of (MPK, PK) and may be represented by a permutation function pair (Q, G). That is, $K_v=(Q, V)$.

Verification function V may be represented by V=GQQ through left multiplication as a group action of permutations Q and G constituting $K_v$. Accordingly, $V(S, K_v) = GQQ(MS) = M$.

When $X = x_1x_2 \ldots x_k$ signature sequence X is a continuous signature character string including $x_i$ as elements of the signature set $M_s$, if the result message character string is $D=d_1d_2 \ldots d_k$, $V(x_i, K_v) = GQQ(M_s(X_i)) = d_i$ may be satisfied.

When
$$G=\begin{pmatrix} 1 & \cdots & n \\ g_1 & \cdots & g_n \end{pmatrix}, \quad Q=\begin{pmatrix} 1 & \cdots & n \\ q_1 & \cdots & q_n \end{pmatrix}, \quad M_s=\begin{pmatrix} 1 & \cdots & n \\ m_1 & \cdots & m_n \end{pmatrix},$$

$$GQQ(M_s(x_i))=\begin{pmatrix} 1 & \cdots & n \\ g_1 & \cdots & g_n \end{pmatrix}\begin{pmatrix} 1 & \cdots & n \\ q_1 & \cdots & q_n \end{pmatrix}\begin{pmatrix} 1 & \cdots & n \\ q_1 & \cdots & q_n \end{pmatrix}\begin{pmatrix} 1 & \cdots & n \\ m_1 & \cdots & m_n \end{pmatrix}(x_i)=d_i$$

may be satisfied, and E may be calculated through left multiplication.

6. Example of message signature/verification transmission method

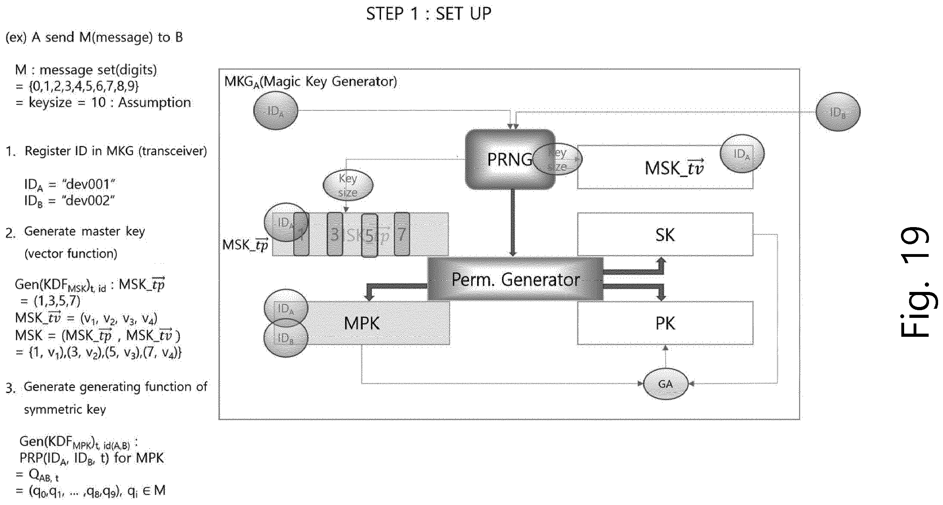

FIGS. 19 to 22 are diagrams showing examples of steps of a message signature transmission method according to an embodiment of the present disclosure.

In the examples, a terminal A may receive a digit string "4581290367" including 10 numbers from the message set including numbers of 0 to 9 as elements, may generate a signature, and may transmit the signature to a terminal B, the terminal B may receive the signature, and may verify an original message, and FIGS. 19 to 22 show this procedure for each step in detail.

FIG. 19 shows the case in which IDs of the transmitting terminal A and the receiving terminal B are registered in the encryption key generator, a master key vector function $\{(1, v_1), (3, v_2), (5, v_3), (7, v_4)\}$ is generated therethrough, and a symmetric key generating function is set for transmission and reception in the first step, that is, the set up step.

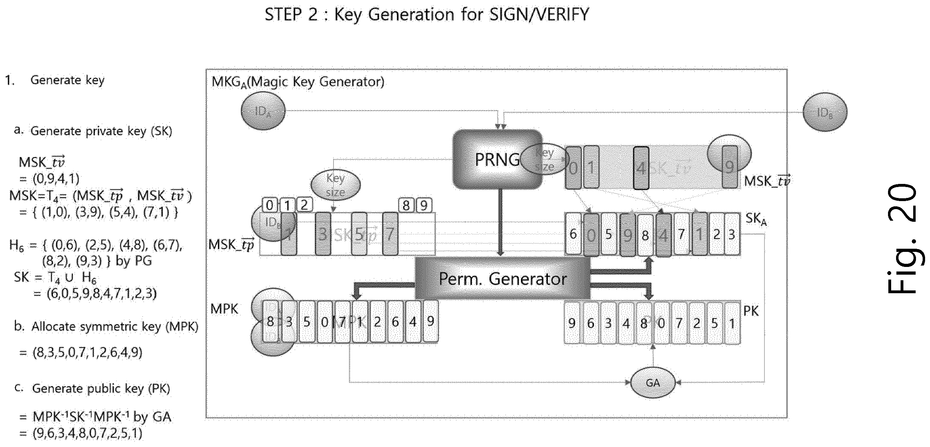

FIG. 20 shows a method of allocating a vector value of a master key vector function and generating a one-time private key in the second step, that is, the key generating step. In addition, the drawing shows a method of allocating a function value to a symmetric key generating function through a permutation generator and a method of generating a private key and a public key through a GA operator therewith.

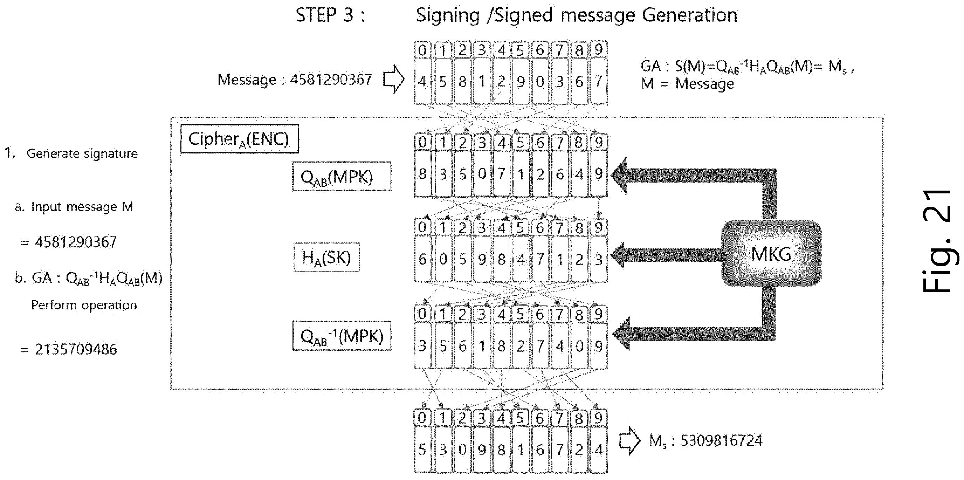

FIG. 21 shows an example of an operating method through a group action by a GA operator through the encryption keys MPK, SK, and PK generated through the first and second steps and a method of generating a signature in the third operation, that is, the signature generating step.

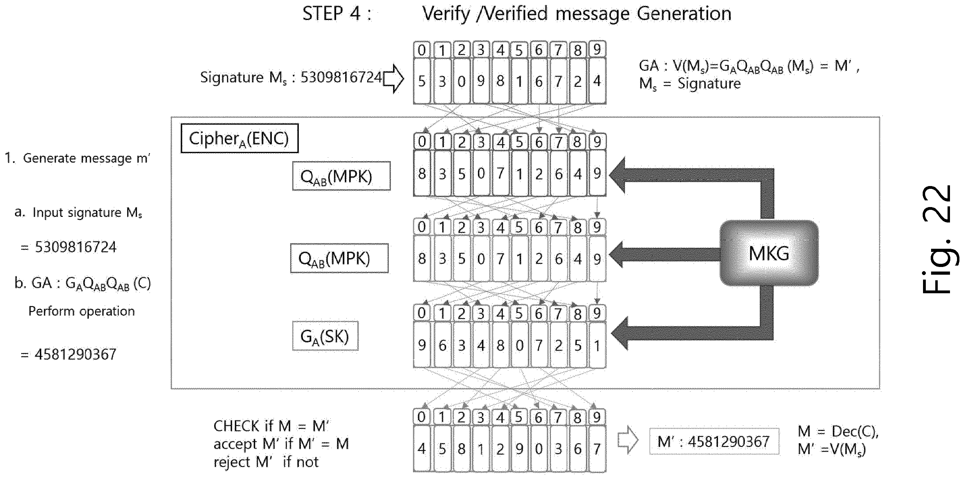

FIG. 22 shows an example of an operating method through a group action by a GA operator through the encryption keys MPK, SK, and PK generated through the first and second steps and a method of verifying the received signature to an original message and accepting/rejecting the original message in the fourth step, that is, the verified message reception/rejection step.

7. Encryption/decryption system including signature/verification of message

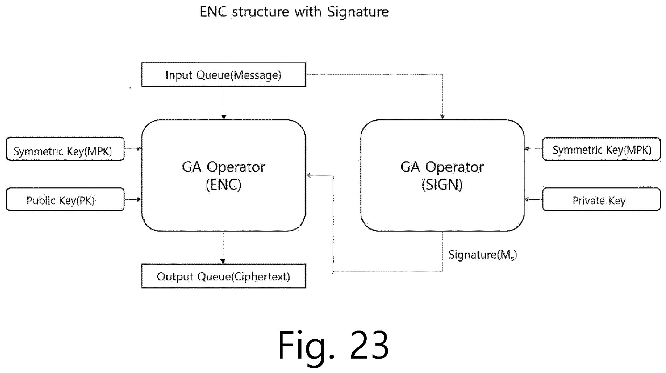

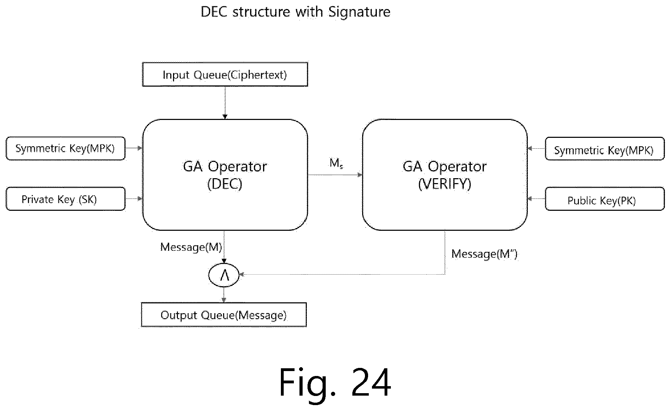

In the encryption system for providing electronic signature and verification, each transceiving terminal may have the same components as in FIG. 5, such as the encryptor ENC, the decrypter DEC, and the encryption key generator MKG, but the encryptor ENC and the decrypter DEC may be changed to include the signer and the verifier as shown in FIGS. 23 and 24, respectively.

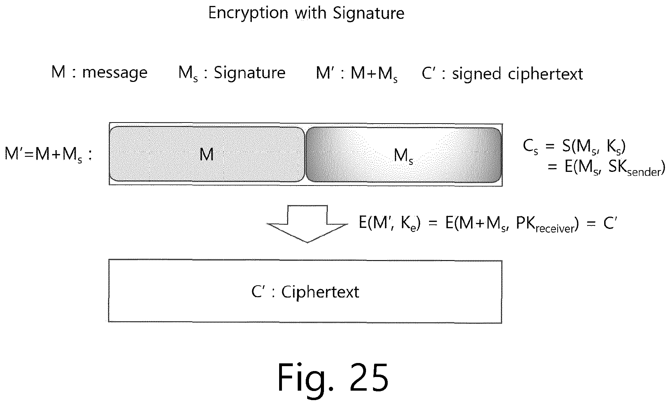

Here, as shown in FIG. 23, the encryptor ENC may be configured by combining the signer of FIG. 25 with the encryptor of FIG. 6 and may include an input queue for processing input of a message, and two different GA operators including a GA operator for generating a ciphertext and a GA operator for generating a signature, and the GA operator for generating a ciphertext may receive the message from the input queue, may receive the signature from the GA operator for generating a signature, and may perform a group action on (message+signature) to generate the ciphertext, as shown in the example of FIG. 25.

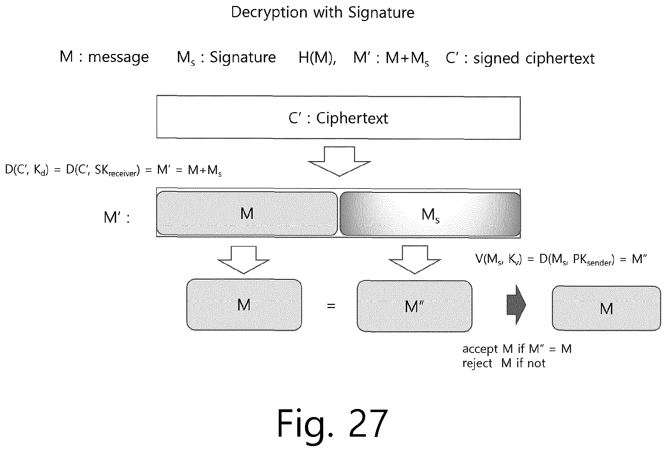

As shown in FIG. 24, the decrypter DEC may be configured by combining the verifier of FIG. 27 with the decrypter of FIG. 6 and may include an input queue for processing input of a ciphertext, and two different GA operators including a GA operator for restoring a message (for decryption) and a GA operator for verifying a signature, and the GA operator for restoring a message (for decryption) may receive the ciphertext from the input queue, may restore (message+signature) through decryption, and here, the signature may be transferred to the GA operator for verifying a signature, and the GA operator for verifying a signature may generate a verified message, as shown in the example of FIG. 27. Whether messages output from the two different GA operators are accepted or rejected may be determined through AND operation.

8. Encryption transmitting and decryption/verification method of signed method

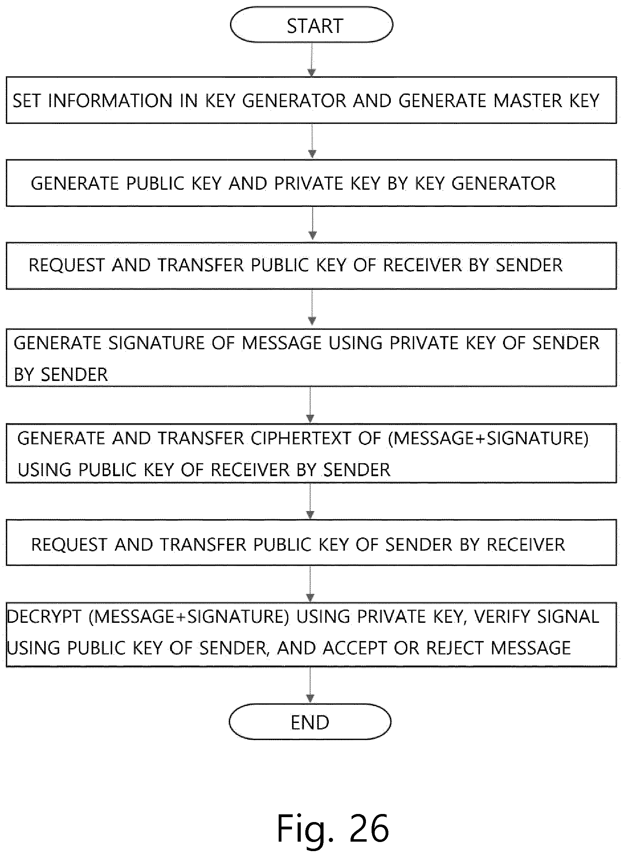

According to an embodiment of the present disclosure, an encryption transmission method for a signed message using a permutation group-based public key is embodied as shown in FIG. 26.

The encryption transmission method for a signed message according to an embodiment of FIG. 26 may be performed by a procedure including six steps, and a method of registering and setting a transceiving participating object as a first step and a method and a procedure of generating a key as a second step may be performed in the same way as the method and the procedure that are described with regard to the encryption and decryption method of FIG. 10 according to an embodiment.

A method and a procedure of generating a signature in a third step may be the same as the message signature/verification method of FIG. 18.

In a fourth step, as in an example of FIG. 25, a message to be transmitted and the signal generated in the third step may be combined with each other to encrypt (message+signature) using a public key of the receiver.

That is, $E(M', K_e) = E((M+M_s), K_e) = Q_{AB}^{-1}G_BQ_{AB}(M+M_s) = C'$ ($K_e$ being private key $H_B$ of receiver B). In a fifth step, the received ciphertext M' may be decrypted to restore $M+M_s$ as in the example of FIG. 27.

That is, $D(C', K_d) = H_BQ_{AB}Q_{AB}(C') = M'$ ($K_d$ being private key $H_B$ of receiver B), $M'=M+M_s$.

In a sixth step, the signature MS may be verified according to $V(M_s, Kv) = Q_{AS}^{-1}G_AQ_{AB}(M_s) = M''$ ($K_v$ being public key $G_A$ of sender A) to obtain the verified message M'', and whether the original message M restored in the fifth step and the verified message M'' match may be checked to determine whether to accept or reject the message. Through the signed message transmission method, whether a message is forged or altered may be determined, and only a message that is not forged or altered may be received to ensure integrity. In addition, since a signature uses the only one-time generated private key of the signed participant, no one except for the signed participant is capable of generating the signature. Accordingly, according to an embodiment, with regard to a message transmitted through a method of transmitting a signed message, a sender may not repudiate transmission of the message.

9. Other embodiments and application example

An encryption key used in encryption may use elements included in a message space such as a digit, a character, or an image. For example, in order to encrypt a character, it may be possible to embody a 256 byte encryption system by extending extended ASCII Code to an encryption key space.

The present inventive system may be embodied in 2 Tier or 3 Tier.

In the 2 Tier, the system may also be applied to a communication structure without an encryption communication medium between a sender for transmitting the encryption message and a receiver for receiving and decrypting the encryption message.

It may be possible to embody both a one-way communication method, in which a function between a sender and a receiver that transmits and receives an encryption message is unilateral, fixed, and unchanged, and a two-way communication method, in which the sender and the receiver transmits and receives the encryption message, and in this case, both an encryption execution object and a decryption execution object may be installed in each of the sender and the receiver.

For example, the system may also be applied to one-to-one communication, peer to peer communication, one to many communication, etc.

In the 3 Tier, the system may also be applied to a communication structure through a gateway for performing a relaying or interworking function with another system, such as an encryption/decryption function or conversion into another communication protocol, between a sender for transmitting an encryption message and a receiver for receiving an encryption message or plain text.

In this case, when the sender transmits a message to a designated receiver, the gateway may execute decryption therein and may transmit plain text itself or may transmit a message with a changed format thorough another encryption method or conversion into another communication protocol form, desired by a receiver, or may also transmit the encrypted message itself transmitted by the sender to the receiver.

The system may be applied to an IoT network method such as sensor-gateway-server or sensor-gateway-sensor, or to a multi-object participatory communication system called a typical 3-Tier method or N-Tier method.

Among terms used in this specification, the transmitting terminal or the receiving terminal may refer to a terminal connected to communicate with at least one network, and for example, may be a mobile terminal such as a cellular phone, a smartphone, a laptop computer, a digital broadcast terminal, a personal digital assistant (PDA), a portable multimedia player (PMP), a slate PC, a tablet computer, or an ultrabook, or a fixed terminal such as a digital TV or a desktop computer, but is not particularly limited.

According to an embodiment of the present disclosure, an asymmetric-type encryption communication system using a permutation group-based one-time public key, which is applicable to various safe environments, may be established.

It may be possible to embody an encryption communication system using an asymmetric key that is available only by a private key using a private permutation generated for one-time use only by a receiving terminal in order to decrypt a one-time public key using a public permutation generated for one-time use as a key for encrypting a message and a ciphertext generated therethrough to plain text.

In this case, both the one-time public key and the one-time private key may be generated through only a master private key of a receiving terminal for decrypting a ciphertext, and it may be possible to embody a system that shares a one-time public key with a transmitting terminal through a safe method. The system may be embodied using a trap door function in the cryptology using which it is difficult to restore or estimate an original message using one-time public key related information owned by the transmitting terminal or a ciphertext generated therethrough.

The public key and the private key may be randomly changed automatically or manually every time during or after encryption communication in order to improve security, and such generation and changing may be performed only by a user/system/device that owns a master private key and has description authority. Through this function, it may be possible to achieve the properties in which it is difficult to expose the public key and the private key used in the encryption communication system and to estimate the same through collection of ciphertext and reverse engineering.

Symmetric key encryption communication without key exchange

It may be possible to embody the encryption communication system using a method in which a permutation key as a cipher related key required for the system is not directly transmitted. For example, after generating a public key/private key required in an encryption procedure and a decryption procedure, a transmitting terminal and a receiving terminal that predetermine a corresponding generating condition (a time and a space) and changing condition when the keys are generated and changed may include GA operators thereof, respectively, the transmitting terminal may autonomously generate an imaginary public key, and accordingly, a system may be established as if the system performs symmetric key encryption communication without key exchange rather than directly transmitting/receiving encryption related key information required in the encryption communication procedure.

Since a value transmitted through a public key used for encryption is derived through a private key that is generated using only some of information in a master private key that only a receiver owns, it may be possible to embody an encryption communication system using which it is difficult to decrypt or estimate plain text using information on the derived value.

Safe maintenance even in key exposure

Since a public key and a private key are changed randomly every time according to a security policy or system requirements, it may be possible to embody a system using which a ciphertext generated after a malicious user possessing previous information steals relevant information is not capable of being decrypted even after the relevant information is exposed.

As described above, according to the present disclosure, an asymmetric method based on a permutation may be used and encryption may be processed in byte units or message processing units with a desired size, and thus it may be possible to embody various methods according to message types.

In addition, according to the present disclosure, an operation may be performed directly in an application message processing unit, and thus a processing speed may be dramatically increased compared with the prior art in which a message is encrypted in block units and then reconstructed into a form usable by the application. As such, the present disclosure may be implemented in low-performance CPU devices.

In addition, according to the present disclosure, it may be possible to embody both symmetric key/asymmetric key methods in a single encryption system, it may be possible to process all of various message forms in an applied application, it may be embody a flexible function under 2-Tier and 3-Tier communication structures, and the present disclosure may be applied to a conventional system of a human to machine method based on password/PIN or a system employing a new machine to machine method.

That is, the system according to the present disclosure may be applied as a single system even under a new IoT environment operated under various communication structures based on a lightweight/low-capacity device, and may be operatively associated with a conventional cryptographic technology-based system.

Computer readable recording medium

The message transmission method using a permutation group-based one-time public key according to an embodiment of the present disclosure described above may be implemented in the form of a program instruction executable through various computer components and may be recorded on a computer-readable recording medium. The computer-readable recording medium may include program instructions, data files, data structures, etc. alone or in combination. The program instruction recorded on the computer-readable recording medium may be specially designed and configured for the present disclosure or may be known and available to those skilled in the art of computer software. Examples of the computer readable recording medium include magnetic media such as hard disks, floppy disks, and magnetic tapes, optical recording media such as CD-ROMs and DVDs, and magneto-optical media such as floptical disks, and hardware devices specially configured to store and execute program instructions, such as ROM, RAM, or flash memory. Examples of program instructions include not only machine language code such as those generated by a compiler but also high-level language codes executable by a computer using an interpreter or the like. The hardware device may be configured to operate as one or more software modules to perform processing according to the present disclosure, and vice versa.

**III. Effect of Invention, etc.**

Because a key space and a cipher space are expanded to a multidimensional space by providing different spaces each time due to a key that is changed every time, a conventional method is vulnerable to a brute-force attack due to decreased spatial probability for each attempt, whereas the spatial probability of the present inventive system may always maintain the same probability. Therefore, if a random function that derives a key provides an even probability distribution, a brute-force attack is probabilistically difficult.

Encryption may not be performed through complex mathematical operations, and a fixed function value like a conventional method may not be used, and accordingly, as described above, the key space and cipher space may be expanded to a multi-dimensional space by using a variable function included in a permutation group. Accordingly, even if decryption is performed through a computer with improved computing power, such as a quantum computer, it may be difficult to achieve decryption, and thus the encryption result may have quantum resistant properties.

In addition, because a conventional existing asymmetric key method is vulnerable to man-in-the-middle attack, in order to overcome this problem, it is necessary to issue an identity certificate to all participants that participate in encryption communication through a third-party certificate authority (CA) and to establish infrastructure to perform encrypted communication according to whether the identity certificate is authentic or not. Accordingly, for asymmetric key-type encryption communication safe from man-in-the-middle attack, there is a problem in that it is necessary to establish infrastructure at a huge cost, and because of this infrastructure, an encryption process is complicated and takes a long time to process encryption. Because the system according to the present disclosure may generate different keys each time and perform encryption and decryption, man-in-the-middle attack is impossible, and accordingly, it may be possible to safely perform encryption and communication without a certificate authority (CA) or identity certificate, which is used to overcome the problem.

The method proposed by the present disclosure makes it possible to replace a mathematically based public key cryptographic system that is no longer used due to a problem in terms of insecurity under a quantum computing environment, thereby preventing confusion caused by a problem in terms of data security in a coming quantum computing era.

According to the present disclosure, since a private key of a receiver and a symmetric key are one-time keys that are generated only once when there is a transmission/reception connection, even if an unauthorized participant steals related information, it is impossible to generate the same key, and thus, the stolen ciphertext is not capable of being decrypted, and corresponding information may also be safe from hacking attacks such as man-in-the-middle attack.

In addition, through a signature algorithm according to the present disclosure, it may be possible to determine whether a malicious attacker steals and manipulates a generated ciphertext, and to also provide a non-repudiation function that prevents repudiation of a message sent by a malicious attacker.

It may be possible to establish an effective and safe encryption system and encryption communication system under a new computing environment such as IoT devices or cloud, which needs to satisfy requirements of low capacity/slow speed/cheap operation as well as a conventional system by overcoming problems of a conventional S-box symmetric key encryption system in terms of key exchange and security due to exposure of a ciphertext while maintaining advantages of the S-box symmetric key for ensuring a sufficiently safe and large encryption key space compared with a mathematical encryption system without going through complicated mathematical processing under the current computing environment

While this invention has been particularly shown and described with reference to exemplary embodiments thereof, it will be understood by those skilled in the art that various changes in form and details may be made herein without departing from the spirit and scope of the present disclosure as defined by the appended claims.

Accordingly, the scope of the present disclosure is defined by the claims below rather than the detailed description, and all changes or modifications derived from the meaning, scope, and equivalent concept of the claims are included in the scope of the present disclosure.

## Claims

1. An encryption system using permutation group-cryptographic technology, the encryption system comprising:

   an encryption execution object configured to encrypt a message; and
   a decryption execution object configured to decrypt the encrypted message,
   wherein the encryption execution object and the decryption execution object may encrypt and decrypt the message by simultaneously composing a symmetric key and an asymmetric key in the form of permutation based on a permutation group and may then decrypt an original message using the symmetric key and a private key of the asymmetric key in the form of permutation based on a permutation group when the message is decrypted again.

2. The encryption system according to claim 1, the encryption execution object and the decryption execution object may include an encryptor ENC for encrypting the message using an encryption key $K_e$, a decrypter DEC configured to decrypt the message using a decryption key $K_d$, and an encryption key generator MKG.

3. The encryption system according to claim 2, the encryptor may include an input queue configured to process input of the message, a GA operator configured to generate a ciphertext through a group action using a one-time public key, and an output queue for processing output of the generated ciphertext.

4. The encryption system according to claim 3, the GA operator may receive the symmetric key $Q_{AB}$ and the public key $G_B$ of the decryption execution object from the encryption key generator MKG and may generate a ciphertext through the group action.

5. The encryption system according to claim 4, the group action may be performed according to $Q_{AB}^{-1}G_BQ_{AB}(M) = C$, $Q_{AB}$ may be a symmetric key of the encryption execution object and the decryption execution object, $G_B$ is a public key of the decryption execution object, M may be a message space, and C is a ciphertext space.

6. The encryption system according to claim 2, the decrypter may include an input queue configured to process input of a ciphertext, a GA operator configured to restore an original message through a group action using a one-time private key, and an output queue configured to process output of the restored original message.

7. The encryption system according to claim 6, the GA operator may receive a symmetric key $Q_{AB}$ and a private key $H_B$ of the decryption execution object from the encryption key generator MKG and may restore an original message through a group action.

8. The encryption system according to claim 7, the group action may be performed according to $H_BQ_{AB}Q_{AB}(C) = M$, $Q_{AB}$ is a symmetric key of the encryption execution object and the decryption execution object, $H_B$ may be a private key of the decryption execution object, M may be a message space, and C is a ciphertext space.

9. The encryption system according to claim 2, the encryption key generator may include a random number generator PRNG configured to generate a one-time pseudorandom number through a key derivation function KDF using a plurality of parameters, and a permutation generator configured to generate a one-time pseudorandom permutation PRP through the key derivation function KDF and to provide the one-time pseudorandom permutation PRP to a key generation module.

10. The encryption system according to claim 9, the key generation module may include a master key vector module MSK_$\vec{tp}$ corresponding to a vector function indicating a secret permutation group of the decryption execution object, a master key scalar module MSK_$\vec{tv}$ configured to determine a secret permutation to be used for decryption, a symmetric key module MPK configured to generate a symmetric key shared between the encryption execution object and the decryption execution object, and a public key module PK and a private key module SK configured to generate a public key and a private key together, which are used for message encryption and decryption.

11. The encryption system according to claim 10, the master key vector module MSK_$\vec{tp}$, the master key scalar module MSK_$\vec{tv}$, and the symmetric key module MPK may generate the same value through a key derivation function KDF or different key values using a method determined therebetween using a plurality of pieces of unique personal identification information as a parameter.

12. An encryption and decryption method including:

generating a master key using an identification factor by an encryption key generator, generating a symmetric key, and a pair of a private key and a public key, which are required for encryption and decryption, by the encryption key generator;
receiving a symmetric key and a public key of a decryption execution object as an encryption key and generating a ciphertext by the encryption execution object; and
restoring the symmetric key through the encryption key generator and a ciphertext generated through the private key of the decryption execution object by the decryption execution object.

13. The encryption and decryption method according to claim 12, the identification factor may include at least one of a user identifier including personal information of a user, a terminal device identifier including user terminal information, and a secret permutation generating factor.

14. The encryption and decryption method according to claim 13, the ciphertext may be calculated and generated by the GA operator using the generated symmetric key and the public key of the decryption execution object.

15. The encryption and decryption method according to claim 14, the ciphertext C may be generated according to a group action ($M \times K \to C$) by inserting the encryption key ($K_e$) into an encryption function (E) in the following equation:

$$E (M, K_e) = Q^{-1}GQ(M) = C.$$

Here, $Q^{-1}GQ$ may be a group action (left multiplication) of a permutation function G, Q, message $M = (m_1 \cdots m_n)$, key $K = (k_1 \cdots k_n)$, and ciphertext $C = (c_1 \cdots c_n)$ is an element of the permutation group G in a message set $M = \{m_1 \cdots m_n\}$ ($M, K, C \in G$).

16. The encryption and decryption method according to claim 12, the ciphertext may be restored and generated according to a group action ($C \times K \to M$) by inserting the decryption key ($K_d$) into a decryption function (D) in the following equation:

$$D (C, K_d) = HQQ(C) = M.$$

Here, HQQ may be a group action (left multiplication) of a permutation function H, Q, message $M = (m_1 \cdots m_n)$, key $K = (k_1 \cdots k_n)$, and ciphertext $C = (c_1 \cdots c_n)$ is an element of a permutation group G in the message set $M = \{m_1 \cdots m_n\}$ ($M, K, C \in G$).

17. An encryption system using permutation group-cryptographic technology including:

a signature execution object configured to generate a signature when a ciphertext is written; and
a verification execution object formed to verify the signature in order to decrypt the ciphertext into an original message,
wherein the signature is generated and verified using a symmetric key and an asymmetric key in the form of permutation based on a permutation group.

18. The encryption system according to claim 17, the signature execution object and the verification execution object may include a singer configured to generate a signature through a group action, a verifier configured to verify the signature through the group action, and an encryption key generator MKG.

19. The encryption system according to claim 18, the signer may include an input queue configured to process input of a message, a GA operator for generating a signature through a group action using a one-time private key, and an output queue for processing output of the generated signature.

20. The encryption system according to claim 19, the GA operator of the signer may receive a symmetric key $Q_{AB}$ and a private key $H_A$ of the signature execution object from the encryption key generator MKG and may generate a signature through the group action.

21. The encryption system according to claim 20, the group action of the signer may be performed according to $Q_{AB}^{-1}H_AQ_{AB}(M) = M_s$, $Q_{AB}$ may be a symmetric key of the signature execution object and the verification execution object, $H_A$ is a private key of the signature execution object, M may be a message $(m_1 \cdots m_n)$, and $M_S$ may be a signature $(s_1 \cdots s_n)$.

22. The encryption system according to claim 21, the verifier may include an input queue configured to receive and process a signature, a GA operator configured to generate an original message accepted by verifying a signature through the group action using a one-time public key, and an output queue configured to process output of the accepted original message.

23. The encryption system according to claim 22, the GA operator of the verifier may receive a symmetric key $Q_{AB}$ and a public key $G_A$ of the signature execution object from the encryption key generator MKG and may check whether the signature is accepted or rejected by verifying the signature through the group action.

24. The encryption system according to claim 23, the group action of the verifier may be performed according to $G_AQ_{AB}Q_{AB}(M_s) = M$, $Q_{AB}$ may be a symmetric key of the signature execution object and the verification execution object, $G_A$ may be a public key of the signature execution object, M may be a message $(m_1 \cdots m_n)$, and $M_S$ may be a signature $(s_1 \cdots s_n)$.

25. The encryption system according to claim 18, the encryption key generator may include a random number generator PRNG configured to generate a one-time pseudorandom number through a key derivation function KDF using a plurality of parameters, and a permutation generator configured to generate a one-time pseudorandom permutation PRP through the key derivation function KDF and provide the one-time pseudorandom permutation PRP to the key generation module.

26. The encryption system according to claim 25, the key generation module may include a master key vector module MSK_$\vec{tp}$ corresponding to a vector function indicating a secret permutation group of the signature, a master key scalar module MSK_$\vec{tv}$ configured to determine a secret permutation to be used for decryption, a symmetric key module MPK configured to generate a symmetric key shared between the signature execution object and the verification execution object, and a public key module PK and a private key module SK configured to simultaneously generate a public key and a private key that are one pair of asymmetric keys of the decryption execution object used in message encryption and decryption.

27. The encryption system according to claim 26, the master key vector module MSK_$\vec{tp}$, the master key scalar module MSK_$\vec{tv}$, and the symmetric key module MPK may generate key values through the key derivation function KDF using one or more pieces of identification information for distinguishing between objects as a parameter.

28. A ciphertext signature and verification method including:

generating a master key using an identification factor by an encryption key generator, generating a symmetric key, and a pair of a private key and a public key, which are required for encryption and decryption, by the encryption key generator;
receiving the generated symmetric key and a private key of the verification execution object as a signature key and generating a signature, by the signature execution object, receiving a one-time public key of the signature execution object, which is the symmetric key and the verification key; and
verifying the generated signature through the signature execution object, by the verification execution object, and accepting and rejecting an original message according to the verification result.

29. The ciphertext signature and verification method according to claim 28, the identification factor may include at least one of a user identifier including personal information of a user, a terminal device identifier including user terminal information, and a secret permutation generating factor.

30. The ciphertext signature and verification method according to claim 28, the signature ($M_S$) may be generated according to a group action ($M \times K \rightarrow S$) by inserting a signature key ($K_S$) into a signature function (S) in the following equation:

$$S(M, K_S) = Q^{-1}HQ(M) = M_s.$$

Here, $Q^{-1}HQ$ may be a group action (left multiplication) of a permutation function H, Q, message $M = (m_1 \cdots m_n)$, key $K = (k_1 \cdots k_n)$, and signature $M_s = (s_1 \cdots s_n)$ may be elements of a permutation group G in the message set $M=\{m_1 \cdots m_n\}$ ($M,K,S \in G$).

31. The ciphertext signature and verification method according to claim 28, the signature may be verified and generated according to a group action ($S \times K \rightarrow S$) by inserting a verification key $K_V$ into a verification function V in the following equation:

$$V(S, K_v) = GQQ(M_s) = M.$$

Here, GQQ may be a group action (left multiplication) of a permutation function G, Q, message $M = (m_1 \cdots m_n)$, key $K = (k_1 \cdots k_n)$, and signature $M_s = (s_1 \cdots s_n)$ may be elements of the permutation group G in the message set $M=\{m_1 \cdots m_n\}$ ($M,K,S \in G$).

Fig. 1

Permutation Operation : Group Action

F                                       G

$$\begin{pmatrix} 0\ 1\ 2\ 3\ 4\ 5\ 6\ 7\ 8\ 9 \\ \downarrow \\ 7\ 3\ 9\ 6\ 0\ 2\ 8\ 5\ 1\ 4 \end{pmatrix} \begin{pmatrix} 0\ 1\ 2\ 3\ 4\ 5\ 6\ 7\ 8\ 9 \\ \downarrow \\ 4\ 8\ 6\ 1\ 2\ 7\ 0\ 5\ 9\ 3 \end{pmatrix} (7) \quad = \quad 2$$

F(G(7)) = F(5) = 2          G(7) = 5          FG(7) = 2

F          transpose (X, Y)          F⁻¹                          F⁻¹

$$\begin{pmatrix} 0\ 1\ 2\ 3\ 4\ 5\ 6\ 7\ 8\ 9 \\ 7\ 3\ 9\ 6\ 0\ 2\ 8\ 5\ 1\ 4 \end{pmatrix} \Rightarrow \begin{pmatrix} 7\ 3\ 9\ 6\ 0\ 2\ 8\ 5\ 1\ 4 \\ 0\ 1\ 2\ 3\ 4\ 5\ 6\ 7\ 8\ 9 \end{pmatrix} = \begin{pmatrix} 0\ 1\ 2\ 3\ 4\ 5\ 6\ 7\ 8\ 9 \\ 4\ 8\ 5\ 1\ 9\ 7\ 3\ 0\ 6\ 2 \end{pmatrix}$$

FF⁻¹= I

# Fig. 2

Fig. 3

MAGIC CRYPTO SYSTEM(ENC/DEC)

message (plaintext)

Computer or transmitting device

M

Magic Crypto System (ENC)

Communication Channel

C(ciphertext)

Computer or receiving device

Magic Crypto System (DEC)

M

message (plaintext)

M : ASCII or bits sequence

Fig. 4

MAGIC CRYPTO SYSTEM(ENC/DEC)

# Fig. 5

ENC structure

Fig. 6

DEC structure

Input Queue(Ciphertext)

GA Operator

Symmetric key(MPK)

Private Key(SK)

Output Queue(Message)

Fig. 7

EP 3 883 178 A1

Fig. 8

MKG$_A$(Magic Key Generator)

Message : 4581290367 ⇨

| 0 | 1 | 2 | 3 | 4 | 5 | 6 | 7 | 8 | 9 |
|---|---|---|---|---|---|---|---|---|---|
| 4 | 5 | 8 | 1 | 2 | 9 | 0 | 3 | 6 | 7 |

GA : $Q_{AB}^{-1}G_BQ_{AB}(M)$ , M = Message

CipherA(ENC)

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$G_B$(PK)

| 0 | 1 | 2 | 3 | 4 | 5 | 6 | 7 | 8 | 9 |
|---|---|---|---|---|---|---|---|---|---|
| 7 | 3 | 4 | 1 | 0 | 6 | 2 | 5 | 9 | 8 |

MKG

$Q_{AB}^{-1}$(MPK)

| 0 | 1 | 2 | 3 | 4 | 5 | 6 | 7 | 8 | 9 |
|---|---|---|---|---|---|---|---|---|---|
| 3 | 5 | 6 | 1 | 8 | 2 | 7 | 4 | 0 | 9 |

| 0 | 1 | 2 | 3 | 4 | 5 | 6 | 7 | 8 | 9 |
|---|---|---|---|---|---|---|---|---|---|
| 2 | 1 | 3 | 5 | 7 | 0 | 9 | 4 | 8 | 6 |

⇨ Ciphertext : 2135709486

# Fig. 9

```
                    ┌─────────────────────┐
                    │        START        │
                    └─────────────────────┘
                               │
                               ▼
┌─────────────────────────────────────────────────────────────────┐
│  SET INFORMATION IN KEY GENERATOR AND GENERATE MASTER KEY         │
└─────────────────────────────────────────────────────────────────┘
                               │
                               ▼
┌─────────────────────────────────────────────────────────────────┐
│  GENERATE PUBLIC KEY AND PRIVATE KEY BY KEY GENERATOR             │
└─────────────────────────────────────────────────────────────────┘
                               │
                               ▼
┌─────────────────────────────────────────────────────────────────┐
│  REQUEST AND TRANSFER PUBLIC KEY OF RECEIVER BY SENDER            │
└─────────────────────────────────────────────────────────────────┘
                               │
                               ▼
┌─────────────────────────────────────────────────────────────────┐
│  GENERATE AND TRANSMIT CIPHERTEXT USING PUBLIC KEY OF RECEIVER    │
│  BY SENDER                                                        │
└─────────────────────────────────────────────────────────────────┘
                               │
                               ▼
┌─────────────────────────────────────────────────────────────────┐
│  RECEIVE CIPHERTEXT AND DECRYPT CIPHERTEXT USING PRIVATE KEY OF   │
│  RECEIVER                                                         │
└─────────────────────────────────────────────────────────────────┘
                               │
                               ▼
                    ┌─────────────────────┐
                    │         END         │
                    └─────────────────────┘
```

Fig. 10

STEP 1 : SET UP

(ex) A send M(message) to B

M : message set(digits)
= {0,1,2,3,4,5,6,7,8,9}
= keysize = 10 : Assumption

1. Register ID in MKG (transceiver)

$ID_A$ = "dev001"
$ID_B$ = "dev002"

2. Generate master key (vector function)

$Gen(KDF_{MSK})_{t, id}$ : $MSK\_\vec{tp}$
= (2,4,6,8)
$MSK\_\vec{tv}$ = $(v_1, v_2, v_3, v_4)$
$MSK$ = $(MSK\_\vec{tp}, MSK\_\vec{tv})$
= $\{(2, v_1),(4, v_2),(6, v_3),(8, v_4)\}$

3. Generate generating function
   of symmetric key

$Gen(KDF_{MPK})_{t, id(A,B)}$ :
$PRP(ID_A, ID_B, t)$ for MPK
= $Q_{AB, t}$
= $(q_0,q_1, ... ,q_8,q_9)$, $q_i \in M$

MKG_B(Magic Key Generator)

$ID_B$      $ID_A$

PRNG     Key size     $MSK\_\vec{tv}$     $ID_B$

$ID_B$     Key size

$MSK\_\vec{tp}$     2   4 SK 6   8     SK

Perm. Generator

$ID_A$     MPK     PK

$ID_B$

GA

Fig. 11

EP 3 883 178 A1

STEP 2 : Key Generation for Enc/Dec at time t

Fig. 12

EP 3 883 178 A1

STEP 3 : Encryption /Ciphertext Generation

Message : 4581290367 ⇨

| 0 | 1 | 2 | 3 | 4 | 5 | 6 | 7 | 8 | 9 |
|---|---|---|---|---|---|---|---|---|---|
| 4 | 5 | 8 | 1 | 2 | 9 | 0 | 3 | 6 | 7 |

GA : $Q_{AB}^{-1}G_B Q_{AB}(M)$ , M = Message

1. Generate ciphertext

a. Input message M
   = 4581290367

b. GA : $Q_{AB}^{-1}G_B Q_{AB}(M)$
   perform operation
   = 2135709486

Cipher$_A$(ENC)

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$G_B$(PK)

| 0 | 1 | 2 | 3 | 4 | 5 | 6 | 7 | 8 | 9 |
|---|---|---|---|---|---|---|---|---|---|
| 7 | 3 | 4 | 1 | 0 | 6 | 2 | 5 | 9 | 8 |

$Q_{AB}^{-1}$(MPK)

| 0 | 1 | 2 | 3 | 4 | 5 | 6 | 7 | 8 | 9 |
|---|---|---|---|---|---|---|---|---|---|
| 3 | 5 | 6 | 1 | 8 | 2 | 7 | 4 | 0 | 9 |

MKG

| 0 | 1 | 2 | 3 | 4 | 5 | 6 | 7 | 8 | 9 |
|---|---|---|---|---|---|---|---|---|---|
| 2 | 1 | 3 | 5 | 7 | 0 | 9 | 4 | 8 | 6 |

⇨ Ciphertext : 2135709486

Fig. 13

STEP 4 : Decryption /Message Generation

Ciphertext : 213509486 ⇨

| 0 | 1 | 2 | 3 | 4 | 5 | 6 | 7 | 8 | 9 |
|---|---|---|---|---|---|---|---|---|---|
| 2 | 1 | 3 | 5 | 7 | 0 | 9 | 4 | 8 | 6 |

GA : $H_B Q_{AB} Q_{AB}$ (C) , C = Ciphertext

1. Generate message

a. Input ciphertext C

= 2135709486

b. GA : $H_B Q_{AB} Q_{AB}$ (C)

Perform operation

= 4581290367

Cipher$_A$(ENC)

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$H_B$(SK)

| 0 | 1 | 2 | 3 | 4 | 5 | 6 | 7 | 8 | 9 |
|---|---|---|---|---|---|---|---|---|---|
| 5 | 4 | 2 | 1 | 9 | 7 | 3 | 6 | 8 | 0 |

MKG

| 0 | 1 | 2 | 3 | 4 | 5 | 6 | 7 | 8 | 9 |
|---|---|---|---|---|---|---|---|---|---|
| 4 | 5 | 8 | 1 | 2 | 9 | 0 | 3 | 6 | 7 |

⇨ Message : 4581290367

Fig. 14

35

MAGIC CRYPTO SYSTEM(SIGN/VERIFY)

Fig. 15

SIGN structure

Fig. 16

# VERIFY structure

Fig. 17

```
                              ┌──────────────┐
                              │    START     │
                              └──────┬───────┘
                                     │
                                     ▼
┌────────────────────────────────────────────────────────────────┐
│ SET INFORMATION IN KEY GENERATOR AND GENERATE                    │
│ MASTER KEY                                                       │
└────────────────────────────────────┬───────────────────────────┘
                                     │
                                     ▼
┌────────────────────────────────────────────────────────────────┐
│ GENERATE PUBLIC KEY AND PRIVATE KEY BY KEY GENERATOR            │
└────────────────────────────────────┬───────────────────────────┘
                                     │
                                     ▼
┌────────────────────────────────────────────────────────────────┐
│ GENERATE AND TRANSFER SIGNAL OF MESSAGE USING                    │
│ PRIVATE KEY OF SENDER BY SENDER                                  │
└────────────────────────────────────┬───────────────────────────┘
                                     │
                                     ▼
┌────────────────────────────────────────────────────────────────┐
│ REQUEST AND TRANSFER PUBLIC KEY OF SENDER BY RECEIVER            │
└────────────────────────────────────┬───────────────────────────┘
                                     │
                                     ▼
┌────────────────────────────────────────────────────────────────┐
│ VERIFY SIGNAL USING PUBLIC KEY OF SENDER BY RECEIVER            │
└────────────────────────────────────┬───────────────────────────┘
                                     │
                                     ▼
                              ┌──────────────┐
                              │     END      │
                              └──────────────┘
```

# Fig. 18

STEP 1 : SET UP

(ex) A send M(message) to B

M : message set(digits)
= {0,1,2,3,4,5,6,7,8,9}
= keysize = 10 : Assumption

1. Register ID in MKG (transceiver)

$ID_A$ = "dev001"
$ID_B$ = "dev002"

2. Generate master key
   (vector function)

$Gen(KDF_{MSK})_{t, id}$ : $MSK\_\vec{tp}$
= (1,3,5,7)
$MSK\_\vec{tv}$ = $(v_1, v_2, v_3, v_4)$
$MSK$ = ($MSK\_\vec{tp}$ , $MSK\_\vec{tv}$ )
= {(1, $v_1$),(3, $v_2$),(5, $v_3$),(7, $v_4$)}

3. Generate generating function of
   symmetric key

$Gen(KDF_{MPK})_{t, id(A,B)}$ :
$PRP(ID_A, ID_B, t)$ for MPK
= $Q_{AB, t}$
= $(q_0, q_1, ... , q_8, q_9)$, $q_i \in M$

MKG_A(Magic Key Generator)

$ID_A$  $ID_B$

PRNG  Key size

$MSK\_\vec{tv}$  $ID_A$

Key size

$ID_A$  $MSK\_\vec{tp}$  3  SK  5  $\vec{tp}$  7

$ID_A$  $ID_B$  Perm. Generator

MPK

SK

PK

GA

Fig. 19

40

STEP 2 : Key Generation for SIGN/VERIFY

1. Generate key

a. Generate private key (SK)

$MSK\_\overrightarrow{tv}$
$= (0,9,4,1)$
$MSK=T_4= (MSK\_\overrightarrow{tp}, MSK\_\overrightarrow{tv})$
$= \{ (1,0), (3,9), (5,4), (7,1) \}$
$H_6 = \{ (0,6), (2,5), (4,8), (6,7), (8,2), (9,3) \}$ by PG
$SK = T_4 \cup H_6$
$= (6,0,5,9,8,4,7,1,2,3)$

b. Allocate symmetric key (MPK)
$= (8,3,5,0,7,1,2,6,4,9)$

c. Generate public key (PK)
$= MPK^{-1}SK^{-1}MPK^{-1}$ by GA
$= (9,6,3,4,8,0,7,2,5,1)$

MKG$_A$(Magic Key Generator)

MPK

MSK_$\overrightarrow{tp}$

Perm. Generator

PRNG

Key size

SK$_A$

PK

MSK_$\overrightarrow{tv}$

GA

ID$_A$

ID$_B$

Fig. 20

STEP 3 :   Signing /Signed message Generation

EP 3 883 178 A1

Message : 4581290367 ⇨

| 0 | 1 | 2 | 3 | 4 | 5 | 6 | 7 | 8 | 9 |
|---|---|---|---|---|---|---|---|---|---|
| 4 | 5 | 8 | 1 | 2 | 9 | 0 | 3 | 6 | 7 |

GA : $S(M)=Q_{AB}^{-1}H_AQ_{AB}(M)= M_s$ ,
M = Message

1. Generate signature

a. Input message M

= 4581290367

b. GA : $Q_{AB}^{-1}H_AQ_{AB}(M)$

   Perform operation

= 2135709486

Cipher$_A$(ENC)

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$H_A$(SK)

| 0 | 1 | 2 | 3 | 4 | 5 | 6 | 7 | 8 | 9 |
|---|---|---|---|---|---|---|---|---|---|
| 6 | 0 | 5 | 9 | 8 | 4 | 7 | 1 | 2 | 3 |

$Q_{AB}^{-1}$(MPK)

| 0 | 1 | 2 | 3 | 4 | 5 | 6 | 7 | 8 | 9 |
|---|---|---|---|---|---|---|---|---|---|
| 3 | 5 | 6 | 1 | 8 | 2 | 7 | 4 | 0 | 9 |

MKG

| 0 | 1 | 2 | 3 | 4 | 5 | 6 | 7 | 8 | 9 |
|---|---|---|---|---|---|---|---|---|---|
| 5 | 3 | 0 | 9 | 8 | 1 | 6 | 7 | 2 | 4 |

⇨ $M_s$ : 5309816724

Fig. 21

42

STEP 4 :    Verify /Verified message Generation

Signature $M_s$ : 5309816724

| 0 | 1 | 2 | 3 | 4 | 5 | 6 | 7 | 8 | 9 |
|---|---|---|---|---|---|---|---|---|---|
| 5 | 3 | 0 | 9 | 8 | 1 | 6 | 7 | 2 | 4 |

GA : $V(M_s)=G_AQ_{AB}Q_{AB}(M_s) = M'$ ,
$M_s$ = Signature

1. Generate message m'

a. Input signature $M_s$

= 5309816724

b. GA : $G_AQ_{AB}Q_{AB}(C)$

Perform operation

= 4581290367

Cipher$_A$(ENC)

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$Q_{AB}$(MPK)

| 0 | 1 | 2 | 3 | 4 | 5 | 6 | 7 | 8 | 9 |
|---|---|---|---|---|---|---|---|---|---|
| 8 | 3 | 5 | 0 | 7 | 1 | 2 | 6 | 4 | 9 |

$G_A$(SK)

| 0 | 1 | 2 | 3 | 4 | 5 | 6 | 7 | 8 | 9 |
|---|---|---|---|---|---|---|---|---|---|
| 9 | 6 | 3 | 4 | 8 | 0 | 7 | 2 | 5 | 1 |

MKG

CHECK if M = M'
accept M' if M' = M
reject M'  if not

| 0 | 1 | 2 | 3 | 4 | 5 | 6 | 7 | 8 | 9 |
|---|---|---|---|---|---|---|---|---|---|
| 4 | 5 | 8 | 1 | 2 | 9 | 0 | 3 | 6 | 7 |

M' : 4581290367

M = Dec(C),
M' =$V(M_s)$

Fig. 22

43

ENC structure with Signature

Fig. 23

DEC structure with Signature

Fig. 24

Encryption with Signature

M : message     $M_s$ : Signature     M' : M+$M_s$     C' : signed ciphertext

M'=M+$M_s$ :

$$C_s = S(M_s, K_s)$$
$$= E(M_s, SK_{sender})$$

$$E(M', K_e) = E(M+M_s, PK_{receiver}) = C'$$

C' : Ciphertext

# Fig. 25

START

SET INFORMATION IN KEY GENERATOR AND GENERATE MASTER KEY

GENERATE PUBLIC KEY AND PRIVATE KEY BY KEY GENERATOR

REQUEST AND TRANSFER PUBLIC KEY OF RECEIVER BY SENDER

GENERATE SIGNATURE OF MESSAGE USING PRIVATE KEY OF SENDER BY SENDER

GENERATE AND TRANSFER CIPHERTEXT OF (MESSAGE+SIGNATURE) USING PUBLIC KEY OF RECEIVER BY SENDER

REQUEST AND TRANSFER PUBLIC KEY OF SENDER BY RECEIVER

DECRYPT (MESSAGE+SIGNATURE) USING PRIVATE KEY, VERIFY SIGNAL USING PUBLIC KEY OF SENDER, AND ACCEPT OR REJECT MESSAGE

END

Fig. 26

Decryption with Signature

M : message    $M_s$ : Signature    H(M),    M' : M+$M_s$    C' : signed ciphertext

C' : Ciphertext

$D(C', K_d) = D(C', SK_{receiver}) = M' = M+M_s$

M' :    |    M    |    $M_s$    |

$V(M_s, K_v) = D(M_s, PK_{sender}) = M''$

M    =    M''    ⟹    M

accept M if M'' = M
reject M if not

# Fig. 27

## INTERNATIONAL SEARCH REPORT

International application No.

**PCT/KR2019/015346**

### A. CLASSIFICATION OF SUBJECT MATTER

*H04L 9/30(2006.01)i, H04L 9/08(2006.01)i, H04L 9/06(2006.01)i, H04L 9/00(2006.01)i*

According to International Patent Classification (IPC) or to both national classification and IPC

### B. FIELDS SEARCHED

Minimum documentation searched (classification system followed by classification symbols)
H04L 9/30; G06F 21/33; G09C 1/00; H04L 9/00; H04L 9/08; H04L 9/14; H04L 9/32; H04L 9/06

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: symmetric key, asymmetric key, permutation, encryption, signature

### C. DOCUMENTS CONSIDERED TO BE RELEVANT

| Category* | Citation of document, with indication, where appropriate, of the relevant passages | Relevant to claim No. |
|---|---|---|
| Y | JP 2009-128792 A (NIPPON TELEGR & TELEPH CORP. <NTT>) 11 June 2009 See paragraphs [0019], [0021], [0028], claim 1 and figure 1. | 1,2,17,18 |
| A | | 3-16,19-31 |
| Y | KR 10-0406139 B1 (ELECTRONICS AND TELECOMMUNICATIONS RESEARCH INSTITUTE) 14 November 2003 See claim 9. | 1,2,17,18 |
| A | US 7822200 B2 (CAMERON, Kim et al.) 26 October 2010 See claims 1, 16, 17. | 1-31 |
| A | KR 10-2018-0060588 A (SEOUL NATIONAL UNIVERSITY R&DB FOUNDATION et al.) 07 June 2018 See paragraphs [0011], [0012] and claims 1, 6. | 1-31 |
| A | US 2017-0118024 A1 (CRYPTOMETRY LIMITED) 27 April 2017 See paragraphs [0036]-[0074] and claims 9, 28. | 1-31 |

☐ Further documents are listed in the continuation of Box C.  ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 FEBRUARY 2020 (19.02.2020) | **19 FEBRUARY 2020 (19.02.2020)** |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/015346**

| Patent document cited in search report | Publication date | Patent family member | Publication date |
|---|---|---|---|
| JP 2009-128792 A | 11/06/2009 | JP 4934010 B2 | 16/05/2012 |
| KR 10-0406139 B1 | 14/11/2003 | KR 10-2003-0043451 A | 02/06/2003 |
| US 7822200 B2 | 26/10/2010 | CN 1832394 A | 13/09/2006 |
|  |  | CN 1832394 B | 29/06/2011 |
|  |  | EP 1701283 A1 | 13/09/2006 |
|  |  | EP 1701283 B1 | 19/04/2017 |
|  |  | EP 1701283 B8 | 30/08/2017 |
|  |  | JP 2006-254423 A | 21/09/2006 |
|  |  | JP 4896537 B2 | 14/03/2012 |
|  |  | KR 10-1169100 B1 | 26/07/2012 |
|  |  | KR 10-2006-0097583 A | 14/09/2006 |
|  |  | US 2006-0198517 A1 | 07/09/2006 |
| KR 10-2018-0060588 A | 07/06/2018 | KR 10-1873881 B1 | 03/07/2018 |
| US 2017-0118024 A1 | 27/04/2017 | CA 2938174 A1 | 06/08/2015 |
|  |  | CN 106170944 A | 30/11/2016 |
|  |  | CN 106170944 B | 26/11/2019 |
|  |  | EP 3100408 A1 | 07/12/2016 |
|  |  | EP 3100408 A4 | 18/10/2017 |
|  |  | US 2015-0381363 A1 | 31/12/2015 |
|  |  | US 2018-0212776 A1 | 26/07/2018 |
|  |  | US 2018-0212777 A1 | 26/07/2018 |
|  |  | US 9531537 B2 | 27/12/2016 |
|  |  | US 9942045 B2 | 10/04/2018 |
|  |  | WO 2015-113138 A1 | 06/08/2015 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180138716
- KR 20190144235
- US 6212279 B
- US 6243467 B
- US 6782100 B

**Non-patent literature cited in the description**

- **WHITFIELD DIFFIE ; MARK HELLMAN ; RALPH MERKLE.** New Directions in Cryptography. *concept in a seminar paper called,* 1976